# EUROPÄISCHE PATENTSCHRIFT

(11) **EP 1 260 081 B1**
(45) Veröffentlichungstag und Bekanntmachung des Hinweises auf die Patenterteilung: **04.08.2004**
(21) Anmeldenummer: 01909553.8
(22) Anmeldetag: 02.02.2001
(51) Int. Cl.: H04L 12/56, H04L 29/14, H04L 12/413, H04L 12/40, H04L 12/44, H04L 12/437

(54) **NETZWERK MIT REDUNDANZ-EIGENSCHAFTEN SOWIE NETZWERKTEILNEHMER, INSBESONDERE FELDGERÄT, FÜR EIN DERARTIGES NETZWERK**
NETWORK COMPRISING REDUNDANCY FEATURES AND NETWORK NODE, ESPECIALLY A FIELD DEVICE FOR SUCH A NETWORK
RESEAU AYANT DES PROPRIETES DE REDONDANCE ET NOEUD DE RESEAU, NOTAMMENT APPAREIL DE CHAMP POUR RESEAU DE CE TYPE

(30) Priorität: 02.02.2000 DE 10004432
(43) Veröffentlichungstag der Anmeldung: 27.11.2002
(73) Patentinhaber: SIEMENS AKTIENGESELLSCHAFT, 80333 München (DE)
(72) Erfinder: GLAS, Karl, 91074 Herzogenaurach (DE); KLOTZ, Dieter, 90768 Fürth (DE); MÜNCH, Christoph, 76334 Eggenstein (DE)
(86) Internationale Anmeldenummer: PCT/DE2001/000415
(87) Internationale Veröffentlichungsnummer: WO 2001/058114

(56) Entgegenhaltungen:
- EP-A- 0 403 763
- EP-A- 0 560 122
- WO-A-99/46908
- US-A- 4 354 267
- US-A- 5 440 540
- STEWEN C: "OPTIMUM FIBER OPTIC NETWORKING FOR PROFIBUS" ENGINEERING AND AUTOMATION,DE,SIEMENS AKTIENGESELLSCHAFT, BERLIN, Bd. 17, Nr. 3/04, 1. Mai 1995 (1995-05-01), Seiten 13-14, XP000533392 ISSN: 0939-2068
- SOHA M ET AL: "COMPARISON OF SOURCE ROUTING AND SPANNING TREE BRIDGES. COMPARISON OF TWO LAN BRIDGE APPROACHES" IEEE NETWORK,IEEE INC. NEW YORK,US, Bd. 2, Nr. 1, 1988, Seiten 37-43, XP000619282 ISSN: 0890-8044

## Beschreibung

Die Erfindung betrifft ein Netzwerk nach dem Oberbegriff des Anspruchs 1 sowie einen Netzwerkteilnehmer, insbesondere ein Feldgerät, für ein derartiges Netzwerk.

Ein derartiges Netzwerk ist aus der Siemens-Druckschrift "Industrial Ethernet with Switching and Fast Ethernet Technology", Basic Information 10/98, Bestellnummer 6ZB5530-1AH02-0BA0, bekannt. Dort ist ein sogenannter Optical Switch Module (OSM) mit mehreren Ports zum Anschluß weiterer Netzwerkkomponenten beschrieben. Zum Aufbau eines Ethernetoder Fast-Ethernet-Netzwerks werden beispielsweise Endgeräte an die Ports angeschlossen und sind somit über das OSM miteinander verbunden. Mehrere OSM können in einer linienförmigen Struktur zu einer Reihe verschaltet werden. Ein optischer Ring entsteht, wenn die beiden Linienenden an einen Optical-Redundancy-Manager (ORM) angeschlossen sind. Durch Test-Telegramme, welche der ORM in die beiden Linienenden einspeist, wird überprüft, ob eine Unterbrechung innerhalb der Reihe vorhanden ist. Im fehlerfreien Fall, wenn die Reihe also nicht unterbrochen ist, trennt der ORM die beiden Linienenden und im Fehlerfall werden die beiden Linienenden durch den ORM miteinander verbunden. Weiterhin ist in der oben genannten Druckschrift ein Netzwerk beschrieben, das mehrere derartige Reihen enthält, die jeweils über ein ORM zu einem geschlossenen optischen Ring verschaltet sind. Zwei optische Ringe sind über zwei OSM's miteinander gekoppelt. Die beiden zwischen die optischen Ringe geschalteten OSM's bilden jeweils einen Kommunikationskanal, von denen der eine aktiv und der zweite in einen Standby-Modus geschaltet ist. Ihre Statusinformationen tauschen die beiden OSM's über spezielle Standby-Ports aus, die durch Kabel miteinander verbunden sind. Fällt die Verbindung über den aktiven OSM aus, so gibt der redundante OSM seinen Kommunikationskanal frei, d.h., er schaltet vom Standby-Modus in den Aktiv-Modus um. Auf diese Weise wird eine vergleichsweise kurze Rekonfigurationszeit erreicht. Damit wird verhindert, daß physikalische Fehler, vorübergehende elektromagnetische Störungen, Netzwerkerweiterungen oder ein Komponentenaustausch die Kommunikation zwischen den Netzwerkkomponenten beeinträchtigen. Nachteilig dabei ist, daß zwei zusätzliche Geräte für die redundante Verbindung zweier optischer Ringe erforderlich sind, die zudem durch Kabel miteinander verbunden werden mussen. Ähnliche Netzwerke mit Redundanz-Management sind aus den Druckschriften EP-A-0 403 763 und EP-A-0 560 122 bekannt.

Der Erfindung liegt die Aufgabe zugrunde, ein Netzwerk mit Redundanzeigenschaften zu schaffen, das sich durch eine kurze Rekonfigurationszeit auszeichnet und einen geringen Aufwand erfordert.

Zur Lösung dieser Aufgabe weist das neue Netzwerk der eingangs genannten Art die im kennzeichnenden Teil des Anspruchs 1 angegebenen Merkmale auf. Ein Netzwerkteilnehmer für ein derartiges Netzwerk sowie vorteilhafte Ausgestaltungen der Erfindung sind in Anspruch 6 bzw. den Unteransprüchen beschrieben.

Die Erfindung hat den Vorteil, daß für die Kopplung zweier Reihen keine zusätzlichen Geräte erforderlich sind. Damit ist das Netzwerk erheblich kostengünstiger realisierbar.

Für die redundante Auslegung des Kommunikationskanals zwischen zwei Reihen ist kein zusatzlicher Hardwareaufwand, insbesondere für Kabel, erforderlich, wenn der dritte Netzwerkteilnehmer zur Überwachung des ersten Kommunikationskanals Meldetelegramme, sogenannte Port-Select-Telegramme auswertet, welche der erste Netzwerkteilnehmer bei unterbrechungsfreiem Kommunikationskanal zyklisch an die Netzwerkteilnehmer sendet, welche in der ersten Reihe angeordnet sind.

In vorteilhafter Weise kann eine geringe maximale Anzahl der zu durchlaufenden Geräte für reihenüberschreitenden Telegrammverkehr erreicht werden, wenn von zwei betriebsbereiten Kommunikationskanälen derjenige Kommunikationskanal aktiv geschaltet wird, der durch eine Verbindung eines Ports eines Netzwerkteilnehmers, der in der ersten Reihe im geringsten Abstand von der Reihenmitte angeordnet ist, mit einem Port eines Netzwerkteilnehmers, der in der zweiten Reihe angeordnet ist, gebildet wird. Ein bei Abstandsgleichheit zweier Netzwerkteilnehmer entstehender Konflikt kann in einfacher Weise durch eine Priorisierung nach Geräteadressen aufgelöst werden, z.B. indem der Netzwerkteilnehmer mit der kleineren Geräteadresse bevorzugt wird.

Ein Netzwerk zeichnet sich durch eine große Freiheit bezüglich der Teilnehmerverschaltung aus. Auch dreidimensionale Strukturen können realisiert werden. Dazu ist beispielsweise die erste Reihe über zumindest einen dritten Kommunikationskanal mit einer dritten Reihe verbunden. Die zweite Reihe ist direkt oder indirekt über einen Kommunikationspfad an die dritte Reihe angeschlossen, der nicht über Netzwerkteilnehmer der ersten Reihe führt, so daß bei aktivem Zustand aller Kommunikationskanäle des Netzwerks eine Schleife bestehen würde. Zugleich sind die Netzwerkteilnehmer des Netzwerks derart ausgebildet, daß sie durch Austausch von Konfigurationstelegrammen sicherstellen, daß das Netzwerk bezüglich der Kommunikation schleifenfrei ist und jeder Netzwerkteilnehmer mit jedem anderen Netzwerkteilnehmer über genau einen aktiven Kommunikationspfad, d.h. einen Kommunikationspfad, der nur Kommunikationskanäle einschließt, die sich im aktiven Zustand befinden, verbunden ist. Da die bei Schleifen vorhandenen redundanten Übertragungswege durch Konfigurationstelegramme verwaltet werden, ist keine zusätzliche Hardware für die Verwaltung erforderlich.

Zur Herstellung der Schleifenfreiheit des Netzwerks kann in vorteilhafter Weise der bewährte Algorithmus des Spanning-Tree-Verfahrens ausgeführt werden, wobei jede Reihe als virtueller Netzwerkteilnehmer und jeder betriebsbereite Port eines Netzwerkteilnehmers einer Reihe, durch dessen Verbindung mit einem betriebsbereiten Port eines Netzwerkteilnehmers einer anderen Reihe ein betriebsbereiter Kommunikationskanal gebildet wird, als ein betriebsbereiter Port des virtuellen Netzwerkteilnehmers angesehen wird.

Werden die beiden Linienenden einer Reihe durch einen Netzwerkteilnehmer miteinander verbunden, so entsteht daraus eine ringförmige Netzwerktopologie. Der Netzwerkteilnehmer an einem Linienende hat die Funktion eines Redundanz-Managers, der dazu ausgebildet ist, im fehlerfreien Fall, d.h. wenn keine Unterbrechung innerhalb der Reihen vorhanden ist, die beiden Linienenden zu trennen und im Fehlerfall die beiden Linienenden miteinander zu verbinden. Innerhalb der Reihe wird in vorteilhafter Weise eine schnelle Beseitigung eines auftretenden Fehlers ermöglicht und somit die Verfügbarkeit des Netzwerkes erhöht. Ein derartiger redundanter Ring, der zu jedem Betriebszeitpunkt bezüglich der Kommunikation eine linienförmige Netzwerktopologie aufweist, wird ebenfalls als Reihe bezeichnet, da er sich lediglich bezüglich der Redundanz von dieser unterscheidet.

Netzwerkteilnehmer, insbesondere Feldgeräte, mit vier Ports zum Anschluß weiterer Netzwerkkomponenten und mit einer Schnittstelle, einem sogenannten Mikroprozessor-Interface, zur Verbindung der Ports mit einem teilnehmerinternen Prozessorbus sowie mit einer Steuereinheit, einer sogenannten Switch-Control zur Telegrammweglenkung zwischen den Ports und dem Mikroprozessor-Interface haben den Vorteil, daß sie in der vom Anwender von Feldbussen gewohnten Weise in einer Linienstruktur verschaltet werden können. Ein separater Switch, wie er bei einer sternförmigen Struktur erforderlich wäre, entfällt. Insbesondere bei einem Netzwerk nach Ethernet-, Fast-Ethernet- oder Gigabit-Ethernet-Spezifikation wird durch die Erfindung der Aufbau eines Netzes großer Ausdehnung ermöglicht, da lediglich der Abstand zwischen zwei Netzwerkkomponenten bestimmte Grenzen nicht überschreiten darf, die Länge der Linienstruktur jedoch unbegrenzt ist. Darüber hinaus hat die Integration von Switch-Funktionen in den Netzwerkteilnehmer den Vorteil, daß insbesondere bei Ethernet die CSMA/CD-Zugriffssteuerung deaktiviert werden kann und das Netzwerk ein deterministisches Verhalten erhält. Somit wird der Einsatzbereich der Netzwerkteilnehmer und des Netzwerks auf Anwendungsfälle erweitert, in welchen Echtzeitverhalten gefordert wird. An den Netzwerkteilnehmern sind vier Ports zum Anschluß weiterer Netzwerkkomponenten vorgesehen. Teilnehmer können zu einer zwei- oder dreidimensionalen Netzwerkstruktur verschaltet werden, da bei diesen zwei Ports zur Einbindung des Netzwerkteilnehmers in eine Linie zwei weitere zur Verbindung der Linie mit einer anderen Linie verwendet werden können.

Eine Ausführung der durch die Ports realisierten Schnittstellen nach der Ethernet- oder Fast-Ethernet-Spezifikation hat den Vorteil, daß bei der Realisierung beispielsweise eines Feldbusses mit derartigen Netzwerkkomponenten auf bereits aus anderen Bereichen vorhandenes Technologiewissen zurückgegriffen werden kann. Man erhält auf diese Weise ein durchgängiges Netzwerk für Office-, Leit-, Zell- und Feldebene, das einen transparenten Zugriff auf beliebige Daten ermöglicht. Ein Gateway zur Kopplung von Netzwerkbereichen mit verschiedener Physik und verschiedenen Protokollen ist in vorteilhafter Weise nicht erforderlich. Zudem zeichnen sich Netzwerke auf der Basis der Ethernet-Spezifikation durch eine hohe Leistungsfähigkeit der Datenübertragung aus. Sie bieten Kostenvorteile durch eine breit verfügbare Technologie und Komponenten, die in hohen Stückzahlen vorhanden sind. Es ist möglich, eine hohe Zahl von Netzwerkteilnehmern an ein Netzwerk anzuschließen. Durch die Erfindung werden die Vorteile der im Feldbereich favorisierten Linien- oder Busstruktur des Netzwerks, z.B. der Vorteil einer einfachen Verschaltung der Teilnehmer, mit den oben erwähnten Vorteilen von Netzwerken auf der Basis der Ethernet-Spezifikation nach IEEE 802.3 verbunden. Die in den Netzwerkteilnehmer integrierten Switch-Funktionen übernehmen die Funktion einer bisher separat installierten Netzwerkkomponente, beispielsweise eines Switches, die damit entfallt.

Eine weitere Verbesserung bei Anwendungen in der Automatisierungstechnik, insbesondere beim Einsatz in zeitkritischen Anwendungen, wird erreicht, wenn die Steuereinheit der Switch-Funktion derart ausgebildet ist, daß eine Übertragungsprioritat der zu versendenden Telegramme ausgewertet wird und Telegramme mit hoher Priorität vor Telegrammen mit niederer Priorität gesendet werden.

Ein Mikroprozessor zur Korrektur einer internen Uhr anhand in Telegrammen empfangener Uhrzeitinformationen hat den Vorteil, daß verschiedene Netzwerkteilnehmer synchronisierte Aktionen ausfuhren können.

Anhand der Zeichnungen, in denen Ausführungsbeispiele der Erfindung dargestellt sind, werden im folgenden die Erfindung sowie Ausgestaltungen und Vorteile näher erläutert.

Es zeigen:
- Figur 1: eine Kommunikationsstruktur einer automatisierungstechnischen Anlage,
- Figur 2: ein Blockschaltbild einer Schnittstelle eines Netzwerkteilnehmers,
- Figur 3: eine Reihenschaltung von Netzwerkteilnehmern mit linienförmiger Netzwerktopologie,
- Figur 4: eine Reihenschaltung von Netzwerkteilnehmern mit zwei Kommunikationskanälen,
- Figur 5: eine zweidimensionale Verschaltung von Netzwerkteilnehmern,
- Figur 6: eine zweidimensionale Verschaltung mit redundanter Auslegung,
- Figur 7: ein zweidimensionales Netzwerk nach erfolgter Redundanzverwaltung,
- Figur 8: ein dreidimensionales Netzwerk nach erfolgter Redundanzverwaltung,
- Figur 9: den prinzipiellen Aufbau eines Telegramms und
- Figur 10: den Aufbau einer Auftragsliste.

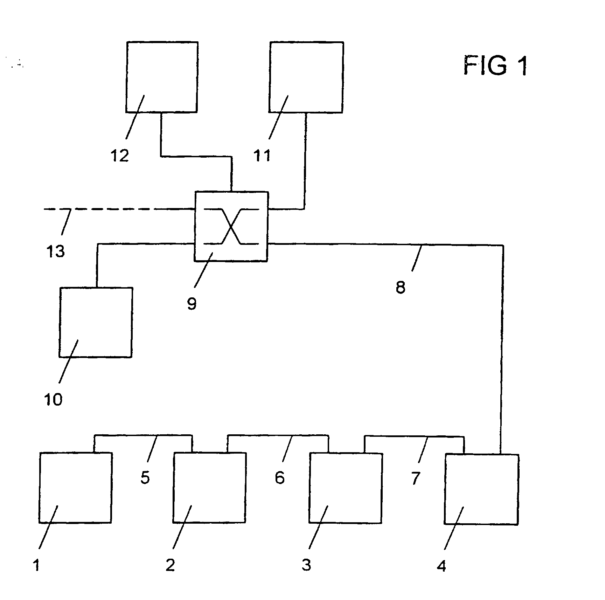

Figur 1 zeigt den Aufbau einer Kommunikationsstruktur in einer automatisierungstechnischen Anlage. Die Kommunikation erfolgt durchgängig auf der Leit-, Zell- und Feldebene durch ein Netzwerk, dessen Datenübertragung dem Fast-Ethernet-Standard nach IEEE 802.3u genügt. In der Feldebene sind ein Sensor 1, beispielsweise ein Druckmeßumformer, ein Sensor 2, hier ein Ultraschalldurchflußmeßumformer, ein Aktuator 3, ein Regelventil zur Einstellung eines Durchflusses, und eine speicherprogrammierbare Steuerung 4 mit Twisted-Pair-Leitungen 5, 6 bzw. 7 busförmig verschaltet. Die speicherprogrammierbare Steuerung 4 bildet zusammen mit den beiden Sensoren 1 und 2 sowie dem Aktuator 3 einen Regelkreis, in welchem die Stellung des Regelventils in Abhängigkeit von den Meßwerten des Druckmeßumformers sowie des Durchflußmeßumformers vorgegeben wird. Die speicherprogrammierbare Steuerung 4 ist über eine Twisted-Pair-Leitung 8 an einen Switch 9 angeschlossen. Mit dem Switch 9 sind in einer sternförmigen Topologie weiterhin ein Zellrechner 10, ein Leitrechner 11 sowie ein Firewall 12, mit welchem ein gesicherter Ethernet-Zugang realisiert ist, verbunden. Mit einer Leitung 13 sind weitere, in der Figur der Übersichtlichkeit wegen nicht dargestellte Zellrechner von benachbarten Zellen der automatisierungstechnischen Anlage an den Switch 9 angeschlossen. Anhand des in Figur 1 dargestellten Beispiels wird insbesondere der Vorteil einer hohen Datentransparenz über alle Ebenen hinweg deutlich. Für Leit-, Zell- und Feldebene wird derselbe Übertragungsstandard verwendet. Dabei sind die Feldgeräte 1, 2 und 3 mit der speicherprogrammierbaren Steuerung 4 in der vom Anwender gewohnten Weise in einer linienförmigen Topologie verschaltet. Ein weiterer Vorteil ist die durchgängige Verwendbarkeit einheitlicher Adressen für die einzelnen Netzwerkteilnehmer. Eine Adreßumsetzung, wie sie bei der Verwendung verschiedener Standards in den verschiedenen Ebenen erforderlich wäre, kann bei dem neuen Netzwerk und den neuen Netzwerkteilnehmern in einer automatisierungstechnischen Anlage entfallen.

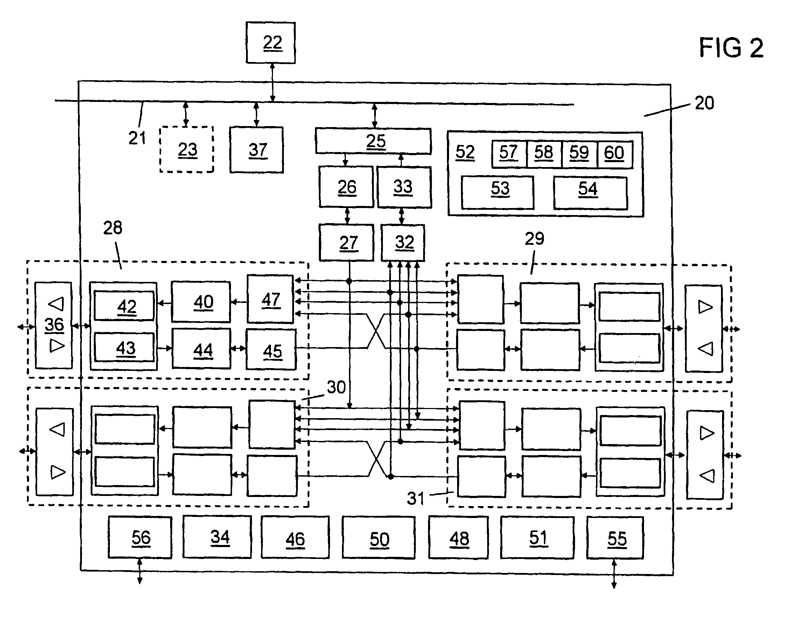

Figur 2 zeigt den prinzipiellen Aufbau der Kommunikationsschnittstelle eines Netzwerkteilnehmers, beispielsweise des Sensors 2 in Figur 1. Applikationsspezifische Schaltungsteile, wie z.B. ein mechanisch-elektrisches Wandlerelement, eine Einrichtung zur Signalvorverarbeitung und eine Spannungsversorgung, sind der Übersichtlichkeit wegen nicht dargestellt. Die in einem Rechteck 20 zusammengefaßten Teile konnen in einem ASIC (Application Specific Integrated Circuit) integriert werden. Die Kommunikation mit den anwendungsspezifischen Schaltungsteilen des Netzwerkteilnehmers erfolgt über einen Mikroprozessor-Bus 21, an welchen ein RAM 22, ein Mikroprozessor 23 und ein Mikroprozessor-Interface 25 angeschlossen sind. Mit durchbrochenen Linien ist in der Darstellung des Mikroprozessors 23 angedeutet, daß die Integration in das ASIC optional ist. Seine Funktionen könnten von einem externen Prozessor übernommen werden. Aufgabe des Mikroprozessors 23 ist die Ausführung von Anwenderprogrammen und von Kommunikationsfunktionen, beispielsweise die Abwicklung von TCP/IP. Eine weitere Aufgabe kann die Verwaltung von Sendeund Empfangslisten von Telegrammen unterschiedlicher Priorität im externen RAM 22 sein. Der Mikroprozessor 23 wählt aus einer Sendeliste im externen RAM 22 einen Auftrag aus und startet über ein Mikroprozessor-Interface 25 einen DMA-Kontroller 26, der als DMA 1-Control bezeichnet wird, nachdem er zuvor in den DMA-Kontroller 26 die Anzahl der zu sendenden Daten-Bytes und einen Pointer, der auf das zu sendende Daten-Byte zeigt, eingetragen hat. Ist der Sendeauftrag durch den DMA-Kontroller 26 vollständig in einen Transmit-Buffer 27 übertragen, so entfernt der Mikroprozessor 23 diesen Sendeauftrag aus der Sendeliste im RAM 22 und bearbeitet den nächsten Sendeauftrag, sofern die Sendeliste nicht leer ist und im Transmit-Buffer 27 noch freier Speicherplatz verfügbar ist.

In das ASIC 20 sind weiterhin vier Ethernet-Kontroller 28, 29, 30 und 31 integriert. Jeder dieser Ethernet-Kontroller trägt die Datenbytes eines vollständig empfangenen Telegramms uber einen Multiplexer 32, einen DMA-Kontroller 33, der auch als DMA 2-Control bezeichnet wird, und das Mikroprozessor-Interface 25 in eine Empfangsliste im RAM 22 ein. Der Mikroprozessor 23 greift auf die Empfangsliste zu und wertet die empfangenen Daten entsprechend einem Applikationsprogramm aus.

Das Mikroprozessor-Interface 25 bildet die wesentliche Schnittstelle zwischen den Ethernet-Kontrollern 28 ... 31 und dem Mikroprozessor-Bus 21. Es steuert oder arbitriert die Schreib- und Lesezugriffe, die über den DMA-Kontroller 33 bzw. den DMA-Kontroller 26 auf das RAM 22 erfolgen. Liegen von beiden DMA-Kontrollern 26 und 33 gleichzeitig DMA-Anforderungen vor, so entscheidet das Mikroprozessor-Interface 25 über die Zugriffsrechte der beiden DMA-Kanäle. Über das Mikroprozessor-Interface 25 können weiterhin durch den Mikroprozessor 23 Parameterregister 34 geschrieben werden, die zum Betrieb der Kommunikationsschnittstelle des Netzwerkteilnehmers erforderlich sind. Als Beispiele seien ein Pointer auf den Beginn des hochprioren Speicherbereichs in einem Transmit-Buffer eines Ethernet-Kontrollers, ein Pointer auf den Beginn des hochprioren Speicherbereichs in jedem der Receive-Buffer der Ethernet-Kontroller, ein Betriebsartenregister für allgemeine Steuerbits, eine Adresse der Reihe, welcher der Netzwerkteilnehmer angehört, eine Zykluszeit für sog. Port-Select-Telegramme und Einstellungen verschiedener Überwachungszeitintervalle genannt.

Der Transmit-Buffer 27 hat eine Größe von mehr als drei Kilobyte und ist in einen Speicherbereich für hochpriore und einen Speicherbereich für niederpriore Telegramme aufgeteilt. Das Verhältnis der beiden Speicherbereiche ist parametrierbar. Die Speicherbereiche des Transmit-Buffers für hoch- und niederpriore Daten sind jeweils als Ringpuffer realisiert. Mit dem Senden der Daten aus dem Transmit-Buffer 27 über einen oder mehrere Ethernet-Kontroller 28 ... 31 wird begonnen, wenn die Anzahl der eingetragenen Bytes eines Telegramms großer ist als der parametrierbare Füllstand, oder wenn ein komplettes Telegramm vom RAM 22 in den Transmit-Buffer 27 kopiert wurde und mindestens ein Ethernet-Kontroller 28 ... 31 für den Sendebetrieb frei ist.

Die Ethernet-Kontroller 28 ... 31 sind jeweils identisch aufgebaut. Ihr Aufbau wird am Beispiel des Ethernet-Kontrollers näher erläutert. Eine Einrichtung 40, die als Transmit-Control bezeichnet wird, enthalt ein Steuerwerk, das für das Senden von Telegrammen, für Wiederholungen, Sendeabbruch usw. verantwortlich ist. Sie bildet die Schnittstelle zwischen dem internen Kontrollertakt und dem Sendetakt. Zum Speichern einer Transmit-Status-Information für niederpriore und hochpriore Telegramme ist jeweils ein Transmit-Status-Register in der Einrichtung 40 vorgesehen. Wenn ein Telegramm fehlerfrei über den Port gesendet wurde, wird ein entsprechender Interrupt erzeugt.

Ein Media Independent Interface 41 (MII) integriert den MAC-Sublayer des Layers 2 nach dem Sieben-Schichten-Modell, d.h. des Data-Link-Layer. Dieses bildet eine Schnittstelle zu einem Baustein 36 zur physikalischen Datenübertragung. Weiterhin enthält das MII 41 einen Transmit-Function-Block 42 sowie einen Receive-Function-Block 43. Darüber hinaus sind ein in der Figur 2 nicht dargestellter MAC-Control-Block, ein Adreßfilter, ein Statistikzähler und ein Host-Interface integriert. Über das Media-Independent-Interface können Steuerund Konfigurationsdaten an den Baustein 36 übertragen und Statusinformationen von diesem gelesen werden. Die einzelnen Funktionen des Transmit-Function-Blocks 42 sind: Abbilden der zu sendenden Bytes, Erkennen von Kollisionen im Halbduplexbetrieb und Ausführen eines Back-Off-Algorithmus, Zurverfügungstellen von Transmit-Status-Informationen an die Einrichtung 40 nach Beenden eines Sendevorganges, Einhalten der Ruhezeit Inter-Packet-Gap (IPG) zwischen zwei Telegrammen, Ergänzen der Sendedaten um eine Präambel, einen Start-Off-Frame-Delimeter (SFD) und ein parametrierbares Cyclic-Redundancy-Check-Wort (CRC), Auffüllen eines Telegramms mit Pad-Bytes, wenn die Telegrammlänge < 60 Byte wäre, und ein Abbrechen eines Sendevorgangs auf Anforderung.

Der Receive-Function-Block 43 stellt die empfangenen Bytes einer Einrichtung 44 zur Verfugung, die als Receive-Control bezeichnet wird. Der Receive-Function-Block 43 erkennt den Start-Of-Frame-Delimeter und eine VLAN-Frame. Er prüft das Längenfeld und das CRC-Wort in Telegrammen. Nach Beendigung des Empfangsvorgangs werden Receive-Status-Informationen der Einrichtung 44 zur Verfügung gestellt. Der Block 43 erkennt und entfernt bei Telegrammen Präambel und Start-Of-Frame-Delimeter. Unterschreitet der freie Speicherplatz in einem Receive-Buffer 45 des Ethernet-Kontrollers 28 im Vollduplex-Mode einen vorgegebenen Schwellwert, so sendet der MAC-Control-Block ein Pause-Steuer-Telegramm zur Flußkontrolle über den Baustein 36. Dieses Telegramm veranlaßt den angeschlossenen Netzwerkteilnehmer, so lange keine Datentelegramme an den Ethernet-Kontroller 28 zu senden, bis das mit dem Pause-Steuer-Telegramm gesendete Zeitintervall abgelaufen ist. Der Adreß-Filter führt eine Telegrammfilterung entsprechend Unicast-, Multicast- und Broadcast-Adressen durch. Dazu wird die in einem Telegramm empfangene Zieladresse (DA) mit Filteradressen verglichen. Die Statistikzähler speichern statistische Informationen über Sende- und Empfangsoperationen. Das Host-Interface erlaubt den Zugriff auf Parameterregister und Statistikzähler des Ethernet-Kontrollers 28 durch den jeweils benachbarten Netzwerkteilnehmer.

Die Einrichtung 44 enthält ein Steuerwerk, das für den Empfang von Telegrammen verantwortlich ist. Sie bildet die Schnittstelle zwischen dem internen Takt des Ethernet-Kontrollers 28 und dem Empfangstakt.

Der Receive-Buffer 45 hat eine Größe von mehr als 3 Kilobyte. Er ist in einen Speicherbereich für hochpriore und in einen Speicherbereich für niederpriore Telegramme aufgeteilt. Das Verhältnis der beiden Speicherbereiche ist parametrierbar. Die Speicherbereiche sind jeweils als Ringpuffer realisiert.

Der DMA-Kontroller 33 steuert den DMA-Transfer von einem der Receive-Buffer in den Ethernet-Kontrollern 28 ... 31 zum RAM 22. Der DMA-Transfer beginnt, wenn in einem der Receive-Buffer, beispielsweise im Receive-Buffer 45, die Anzahl der empfangenen Datenbytes einen parametrierbaren minimalen Füllstand erreicht hat oder ein Telegramm vollständig empfangen wurde. Gleichzeitig muß dieser Receive-Buffer von einem Modul 46, das als Switch-Control bezeichnet wird, für den DMA-Transfer selektiert sein.

Der Einrichtung 40 ist ein Multiplexer 47 vorgeschaltet, der durch eine Steuereinheit 46, die als Switch-Control bezeichnet wird, angesteuert wird.

Switch-Control 46 steuert die Datenweiterleitung zwischen den Ethernet-Kontrollern 28 ... 31 und das Abspeichern von empfangenen Daten, wenn sie für den jeweiligen Netzwerkteilnehmer bestimmt sind. Da die Anwendung der Erfindung nicht auf Netzwerke nach der Ethernet-Spezifikation beschränkt ist, werden die Ethernet-Kontroller 28...31 im folgenden auch allgemein als Port 1, Port 2, Port 3 bzw. Port 4 bezeichnet. Welche Ports für die Weiterleitung von empfangenen Daten freigegeben sind, ist abhängig von der Netzstruktur, in welche der Teilnehmer eingebunden ist. Als Funktion des Betriebszustandes, der Netzstruktur, der empfangenen Zieladresse und der Telegrammpriorität steuert Switch-Control 46 folgende Aktionen:
- Ist die empfangene Zieladresse gleich der eigenen Teilnehmeradresse, so wird das empfangene Telegramm über das Mikroprozessor-Interface 25 in das RAM 22 übertragen, ohne es an andere Ports weiterzuleiten.
- Wird an einem Port ein Broadcast-Telegramm empfangen, so wird das Telegramm in das RAM 22 übertragen und den anderen freigegebenen Ports zum Versenden zur Verfügung gestellt.
- Wird an einem Port ein Telegramm mit einer Multicast-Adresse empfangen, die mit einer der in einer Filtertabelle 48 gespeicherten Multicast-Adressen übereinstimmt, so wird das Telegramm in das RAM 22 übertragen und den anderen freigegebenen Ports zum Versenden zur Verfügung gestellt.
- Ist die empfangene Zieladresse verschieden von der eigenen Teilnehmeradresse und den Multicast-Adressen, so wird das Telegramm den anderen freigegebenen Ports zum Versenden zur Verfügung gestellt, ohne zur Weiterverarbeitung abgespeichert zu werden.
- Bei Telegrammen mit sogenannten VLAN-Bytes stehen beispielsweise acht Prioritätsebenen zur Verfügung. Stehen mehrere Telegramme gleichzeitig zum Versenden an, so wird die Sendereihenfolge der Telegramme entsprechend ihrer Übertragungspriorität festgelegt.
- In einem Betriebszustand Monitor-Mode werden alle Telegramme, welche die parametrierten Filterbedingungen erfüllen, in das RAM 22 übertragen.
- Die Telegrammweiterleitung unter Berücksichtigung eines modifizierten Spanning-Tree-Algorithmus.

Switch-Control 46 enthält noch weitere Parameter, deren Bedeutungen später noch genauer erläutert werden: Eine Reihenadresse R_{R3}, die der an Port 3 angeschlossenen Reihe entspricht, eine Reihenadresse R_{R4}, welche die Adresse der an Port 4 angeschlossenen Reihe wiedergibt, eine Anzahl N_{R1} der Übertragungsstrecken bis zum Port 1, eine Anzahl N_{R2} der Übertragungsstrecken bis zum Port 3, einen Wert |N_{R1} - N_{R2}|_{S} des jeweiligen Netzwerkteilnehmers, einen Wert |N_{R1} - N_{R2}|_{Sender} vom Sender eines empfangenen Port-Select-Telegramms, einen Betrag |N_{R1} - N_{R2}|ₘᵢₙ als kleinster bisher empfangener Wert, eine Quelladresse A_{Sender} eines empfangenen Telegramms, eine Quelladresse A_{Stored} des Telegramms mit dem kleinsten Wert von Betrag |N_{R1} - N_{R2}|ₘᵢₙ, eine beste empfangene Kombination (Root_ID.Cost.Transmitter_ID.Port_ID)_{P3}, für Port 3, eine beste empfangene Kombination
(Root_ID.Cost.Transmitter_ID.Port_ID)_{P4} für Port 4, eine beste empfangene Kombination (Root_ID.Cost.Transmitter_ID.Post_ID)_{R} der Reihe, einen Melde-Intervall-Zähler für eine Zykluszeit von Port-Select-Telegrammen, einen Timeout-Zähler für ein Timeout-Intervall an Port 1, einen Timeout-Zähler für ein Timeout-Intervall an Port 2, einen Timeout-Zähler für ein Timeout-Intervall an Port 3, einen Aktiv-Time-Zähler für ein Zeitintervall, das mit dem letzten Empfang eines Port-Select-Telegramms an Port 4 beginnt, einen Kombinations-Alterungszähler für ein maximales Zeitintervall, innerhalb dessen ein Konfigurationstelegramm empfangen werden muß, da sonst die gespeicherte Kombination Root_ID.Cost.Transmitter_IC.Port_ID geloscht wird, einen Zähler für ein Zeitintervall Δt_{rowdelay}, nach welchem ein Port 3 einer Reihe von inaktiv auf aktiv umschaltet, das der zweifachen Worst-Case- Durchlaufzeit eines Port-Select-Telegramms durch die Reihe entspricht, und einen Zähler für ein Zeitintervall Δt_{netdelay}, nach welchem ein Port von potentiell aktiv auf aktiv umgeschaltet wird und welches der zweifachen Worst-Case-Durchlaufzeit eines Konfigurationstelegramms durch das Netzwerk entspricht.

In die Filtertabelle 48 können vom Anwender Multicast- und virtuelle LAN-Identifikationsadressen, sogenannte VLAN-Adressen, eingetragen werden. Ein Multicast- oder VLAN-Telegramm wird nur akzeptiert, wenn die empfangene Adresse mit einer der Adressen in der Filtertabelle 48 übereinstimmt.

Eine Einrichtung 50 zur Redundanzsteuerung soll in einem Netzwerk sicherstellen, daß erkannte physikalische Fehler die Kommunikation zwischen den Netzwerkkomponenten nicht beeinträchtigen. Zum einen besteht innerhalb jeder mit Netzwerkteilnehmern gebildeten Reihe Redundanz. Dazu müssen die in Reihe geschalteten Netzwerkteilnehmer einen Ring bilden, der im störungsfreien Fall an einer Stelle geöffnet ist, im Fehlerfall jedoch geschlossen werden kann. Zum anderen ist Redundanz mit mehreren Kommunikationskanälen zwischen den Reihen möglich. Dazu muß eine Reihe von Netzwerkteilnehmern über mindestens zwei Ports mit einer benachbarten Reihe verbunden sein. Es ist immer nur ein Kommunikationskanal zwischen jeweils zwei Reihen aktiv, d.h. Datentelegramme werden nur über diesen Kommunikationspfad ausgetauscht. Ist ein aktiver Kommunikationskanal zwischen zwei Reihen als fehlerhaft erkannt, wird dieser deaktiviert und auf einen anderen Kommunikationskanal umgeschaltet. Zur Realisierung der Redundanz werden in der Einrichtung 50 ein Zykluszeitregister mit einer parametrierten Zykluszeit für Testtelegramme, ein Zykluszeitzähler zur Erzeugung eines Zykluszeitintervalls, ein Steuerwerk für ein Umschalten auf einen redundanten Kommunikationskanal und für ein Veranlassen eines Versendens von sogenannten Link-Up oder Link-Down-Telegrammen, ein Reihenlaufzeitregister mit einer parametrierten Worst-Case-Durchlaufzeit eines Telegramms durch eine Reihe und ein Reihenlaufzeitzähler zur Erzeugung einer Reihenlaufzeit verwendet.

Über eine Einrichtung 51 zur Interrupt-Steuerung, die auch als Interrupt-Control bezeichnet wird, werden dem Mikroprozessor 23 bestimmte Ereignisse mitgeteilt. Dabei handelt es sich im wesentlichen um Meldungen von gesendeten oder empfangenen Telegrammen und um Fehlermeldungen. Die Einrichtung 51 enthält ein Interrupt-Request-Register, ein Interrupt-Mask-Register, ein Interrupt-Register sowie ein Interrupt-Acknowledge-Register. Im Interrupt-Request-Register wird jedes Ereignis abgespeichert. Über das Interrupt-Mask-Register können einzelne Ereignisse unterdrückt werden. Im Interrupt-Register erscheinen nur die Ereignisse, die vom Interrupt-Mask-Register nicht maskiert werden. Der Eintrag in das Interrupt-Request-Register ist dagegen unabhängig von der Interrupt-Maske im Interrupt-Mask-Register. Mit einem Schreibzugriff auf das Interrupt-Acknowledge-Register können Bits im Interrupt-Request-Register zurückgesetzt werden.
Ein Modul 52 enthält spezielle Anwenderfunktionen, die in der Kommunikationsschnittstelle des Netzwerkteilnehmers zu integrieren sind. Eine Teilfunktion ist mit einem Modul 53 zur Uhrzeitsynchronisation, eine andere mit einem Modul 54 zur Aquidistanz realisiert, welche spater näher erläutert werden. Für die Ports 1 bis 4 ist jeweils ein Delay-Timer 1 bis 4 mit dem Bezugszeichen 57, 58, 59 bzw. 60 vorgesehen, welcher die Übertragungszeit zwischen dem jeweiligen Netzwerkteilnehmer und dem über den jeweiligen Port angeschlossenen Netzwerkteilnehmer ermittelt. Der jeweilige Delay-Timer wird auch als Durchlaufzeit-Timer (DLZ-Timer) für den jeweiligen Port genutzt. Weiterhin sind für jeden Port ein Äquidistanz-Timer, ein Hilfs-Timer für eine Übertragungszeit Δtᵢ über den jeweiligen Port und ein Parameter Δt_{DLZ} vorgesehen, welcher der Summe aus den Durchlaufzeiten in Sende- und Empfangsrichtung und der Leitungslaufzeit zwischen der Kommunikationsschnittstelle und dem über den jeweiligen Port angeschlossenen Netzwerkteilnehmer entspricht. Weiterhin befindet sich eine lokale Uhr 37 in dem Netzwerkteilnehmer, deren Uhrzeit über den Mikroprozessor-Bus 21 lesbar und einstellbar ist.

Ein integriertes Serial-Peripheral-Interface (SPI) 55 ist ein einfaches, aber leistungsfähiges serielles Bussystem zum Anschluß von Peripherie-Bausteinen, z.B. EEPROMs. Ein integriertes E/A-Interface 56 ist eine parallele Schnittstelle mit 12 parametrierbaren Ein- und Ausgängen. Über diese Schnittstelle können beispielsweise LEDs zur Zustandsanzeige angesteuert werden.

Jeder Port der Kommunikationsschnittstelle kann parametrierbar im Halbduplex- oder in Vollduplex-Mode betrieben werden. Während an einem Port der Halbduplex-Mode eingestellt ist, kann gleichzeitig an einem anderen Port der Vollduplex-Mode parametriert sein. Im Vollduplex-Mode können gleichzeitig Telegramme gesendet und empfangen werden. Im Halbduplex-Mode ist dies nicht möglich.
Ein applikationsspezifisches Anwendungsprogramm, das beispielsweise auf dem RAM 22 hinterlegt sein kann, trägt zu versendende Daten in eine Auftragsliste im RAM 22 ein. Der DMA-Kontroller 26 kopiert Daten aus dieser Auftragsliste in den Transmit-Buffer 27. Zusammengestellte Telegramme werden an die freigegebenen Ethernet-Kontroller 28 ... 31 weitergegeben. Tritt ein Sendekonflikt auf, weil durch Switch-Control 46 gesteuert gerade andere Telegramme durch das Kommunikations-Interface weitergeleitet werden, so sollte der Transmit-Buffer 27 zwei komplette Ethernet-Telegramme speichern können. Mit dem Senden der Daten aus dem Transmit-Buffer 27 wird begonnen, wenn eine zu parametrierende Anzahl Datenbytes oder ein komplettes Telegramm vom RAM 22 in den Transmit-Buffer 27 übertragen wurde und mindestens ein Ethernet-Kontroller frei ist. Das Telegramm bleibt so lange im Transmit-Buffer 27 gespeichert, bis es über alle freigegebenen Ethernet-Kontroller 28 ... 31 gesendet wurde. Die Anzahl der Datenbytes eines Telegramms, die mindestens im Transmit-Buffer 27 gespeichert sein müssen, bevor gesendet wird, ist so zu parametrieren, daß ein lückenloses Senden des Telegramms gewährleistet ist. Andernfalls wird das Telegramm von anderen Netzwerkteilnehmern fehlerhaft empfangen. Sind im Transmit-Buffer Telegramme unterschiedlicher Priorität gespeichert, so werden die Telegramme entsprechend ihrer Übertragungspriorität gesendet.

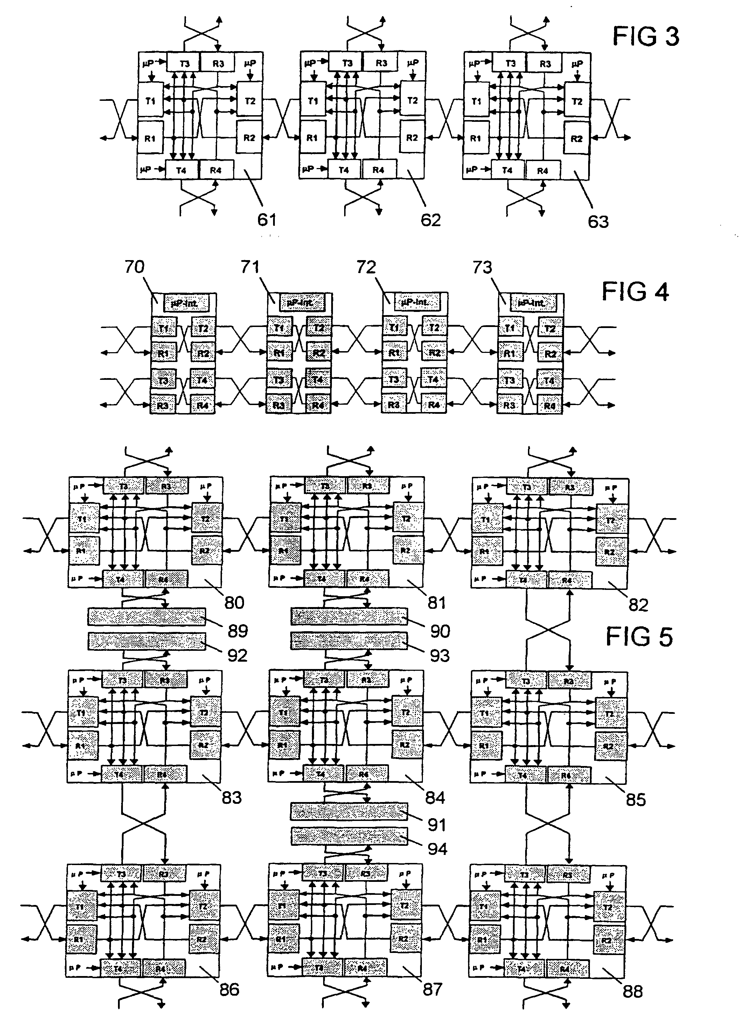

Figur 3 zeigt ein Beispiel einer Verschaltung von drei Netzwerkteilnehmern 61, 62 und 63 in linienförmiger Struktur. Zur besseren Übersichtlichkeit der Darstellung sind die Ports 1 bis 4 der Kommunikationsschnittstelle der Netzwerkteilnehmer 61, 62 und 63 in Schaltungsteile T1 bis T4 für Senderichtung und Schaltungsteile R1 bis R4 für Empfangsrichtung untergliedert. Somit kann beispielsweise Port 2 auch kurz als Port T2/R2 bezeichnet werden. Für eine linienförmige Struktur werden in der dargestellten Weise Port T2/R2 des Netzwerkteilnehmers 61 mit Port T1/R1 des Netzwerkteilnehmers 62 und Port T2/R2 des Netzwerkteilnehmers 62 mit Port T1/R1 des Netzwerkteilnehmers 63 verbunden. Die Datenübertragung erfolgt jeweils mit einem Twisted-Pair-Kabel für jede Übertragungsrichtung. Die beteiligten Ports können somit im Vollduplex-Mode betrieben werden. An die in Figur 3 offenen Ports T3/R3 und T4/R4 sowie an den Port T1/R1 des Netzwerkteilnehmers 61 oder den Port T2/R2 des Netzwerkteilnehmers 63 können wahlweise Endgeräte angeschlossen und somit an das Netzwerk angekoppelt werden.

Figur 4 zeigt eine Reihe von Netzwerkteilnehmern 70, 71, 72 und 73, die jeweils über zwei Kommunikationskanäle miteinander Daten austauschen können. Die Kommunikationskanäle werden jeweils durch eine Verbindung des Ports T2/R2 mit dem Port T1/R1 des benachbarten Netzwerkteilnehmers sowie des Ports T4/R4 mit dem Port T3/R3 des benachbarten Netzwerkteilnehmers in der dargestellten Weise realisiert. Damit kann beispielsweise ein hochpriorer und ein niederpriorer Kommunikationskanal aufgebaut und der Datendurchsatz verdoppelt werden. Ein Datenaustausch zwischen den Kommunikationskanälen findet nicht statt, d.h. ein am Schaltungsteil R1 empfangenes Telegramm kann - falls erforderlich - nur vom Schaltungsteil T2 weitergesendet werden. Beide Kommunikationskanäle werden im Vollduplex-Mode betrieben.

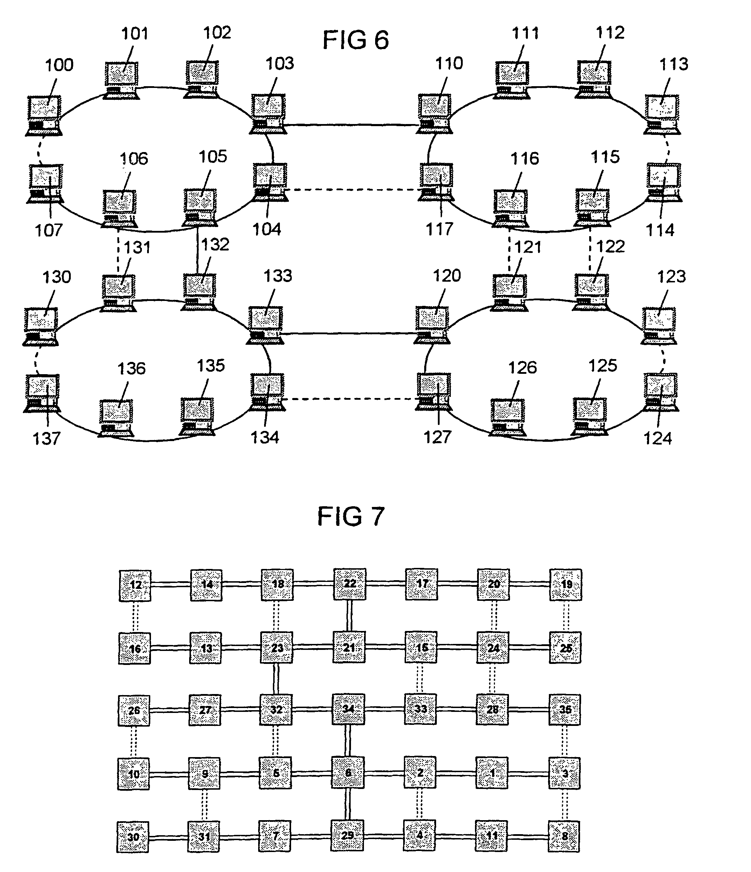

Ein Beispiel für eine zweidimensionale Verschaltung der Netzwerkteilnehmer zeigt Figur 5. Netzwerkteilnehmer 80, 81 und 82 sind in der bereits anhand Figur 3 beschriebenen Weise zu einer Reihe verschaltet. Weiterhin bilden Netzwerkteilnehmer 83, 84 und 85 eine Reihe sowie Netzwerkteilnehmer 86, 87 und 88 bilden eine Reihe. An den Ports T4/R4 der Netzwerkteilnehmer 80, 81 und 84 sind jeweils Endgeräte 89, 90 bzw. 91 angeschlossen, an den Ports T3/R3 der Netzwerkteilnehmer 83, 84 und 87 befinden sich Endgeräte 92, 93 bzw. 94. Durch Verbinden des Ports T4/R4 des Netzwerkteilnehmers 82 mit dem Port T3/R3 des Netzwerkteilnehmers 85 ist ein Kommunikationskanal zwischen den jeweiligen Reihen realisiert. In entsprechender Weise sind zwei Kommunikationskanäle zwischen den Netzwerkteilnehmern 83 und 86 sowie zwischen den Netzwerkteilnehmern 85 und 88 gebildet. Damit Schleifenfreiheit im Netzwerk besteht, darf von diesen jedoch immer nur ein Kommunikationskanal zu einem Zeitpunkt aktiv geschaltet sein.

Den aus den Teilnehmern 80 bis 82, 83 bis 85 und 86 bis 88 gebildeten Reihen ist jeweils eine eindeutige Reihenadresse Rₖ zugewiesen, die in einem Parameterregister "Reihenadresse" hinterlegt ist.

Zur Verdeutlichung der Redundanzsteuerung ist in Figur 6 ein weiteres zweidimensionales Netzwerk dargestellt. Jeweils 8 Netzwerkteilnehmer 100 ... 107, 110 ... 117, 120 ... 127 und 130 ... 137 sind in einer Reihe verschaltet. Sowohl die mit durchbrochenen Linien als auch die mit durchgezogenen Linien eingezeichneten Verbindungen zwischen den Netzwerkteilnehmern stellen Kommunikationskanäle dar. Es muß jedoch sichergestellt sein, daß zwischen zwei beliebigen Netzwerkteilnehmern im gesamten Netzwerk nur ein einziger Kommunikationspfad benutzt wird. Bei mehreren möglichen Kommunikationspfaden würden Schleifen auftreten, d.h. Telegramme würden sich vervielfachen und zirkulieren. Um solche Situationen zu vermeiden, ist der Spanning-Tree-Algorithmus entwickelt worden. Datentelegramme werden nur von Ports empfangen, zu Ports weitergeleitet und von Ports gesendet, die im Spanning-Tree enthalten sind. Die restlichen Ports sind deaktiviert. Deaktivierte Kommunikationskanäle sind in Figur 6 mit durchbrochenen Linien dargestellt, aktivierte mit durchgezogenen Linien. Für eine Redundanz innerhalb einer Reihe werden die beiden Linienenden, beispielsweise an den Netzwerkteilnehmern 100 und 107, miteinander verbunden. Im fehlerfreien Fall wird der auf diese Weise geschaffene Kommunikationskanal deaktiviert, im Fehlerfall in den aktiven Zustand versetzt. Diese Redundanz setzt eine nicht unterbrochene Linienstruktur voraus. Da der Spanning-Tree-Algorithmus gegebenenfalls auch eine Verbindung über die Ports T1/R1 und T2/R2 unterbrechen würde, kann er nicht unverändert angewendet werden. Im folgenden wird ein Verfahren vorgestellt, das für ein Netzwerk aus zusammengeschalteten Reihen von Netzwerkteilnehmern " Schleifenfreiheit sicherstellt, ohne eine Reihe unterbrechen zu müssen. Dazu werden - falls erforderlich - nur die Ports T3/R3 deaktiviert. Es darf immer nur ein Kommunikationskanal zwischen jeweils zwei Reihen aktiv sein, d.h., Datentelegramme werden über diesen Kommunikationspfad ausgetauscht. Über die anderen Kommunikationspfade zwischen zwei Reihen erfolgt kein Datenaustausch. Die Auswahl des einzigen aktiven Kommunikationskanals zwischen jeweils zwei Reihen erfolgt mit Hilfe von Port-Select-Telegrammen. Dabei handelt es sich um Telegramme, die nur innerhalb einer Reihe weitergeleitet werden. Ein Austausch zwischen den Reihen findet nicht statt.

Aufgabe dieser Port-Select-Telegramme ist es, einen Netzwerkteilnehmer zu finden, der über den Port T3/R3 mit einer benachbarten Reihe verbunden ist und bezogen auf die Anzahl der Netzwerkteilnehmer von beiden Enden der Linienstruktur möglichst gleich weit entfernt ist, d.h. den kleinsten Abstand von der Reihenmitte hat. Diese Eigenschaften definieren den einzigen Netzwerkteilnehmer der Reihe, der über Port T3/R3 aktiv mit einer benachbarten Reihe verbunden ist. Alle weiteren Verbindungen über Ports T3/R3 von Netzwerkteilnehmern derselben Reihe zu dieser benachbarten sind deaktiviert. Über deaktivierte Kommunikationskanäle werden keine Datentelegramme ausgetauscht.

Port-Select-Telegramme werden durch eine Kennung im Type-Feld eindeutig gekennzeichnet.

Figur 7 zeigt das Ergebnis der Redundanzsteuerung bei einem zweidimensionalen Netzwerk in einer anderen Darstellungsart. Die in den einzelnen Kästen eingetragene Zahl entspricht der jeweiligen Adresse des Netzwerkteilnehmers. Der Port T1/R1 befindet sich an der linken Seite, der Port T2/R2 an der rechten Seite, der Port T3/R3 an der oberen Seite und der Port T4/R4 an der unteren Seite der Netzwerkteilnehmer. Durch zwei durchgezogene parallele Linien zwischen zwei Teilnehmern ist jeweils ein aktiver, im Vollduplex-Mode betriebener Kommunikationskanal eingezeichnet. Die mit zwei durchbrochenen Linien eingezeichneten Kommunikationskanäle sind deaktiviert.

Der Datenbereich von Port-Select-Telegrammen, die über Port T2/R2 von einem Netzwerkteilnehmer empfangen werden, enthält Informationen über die Anzahl N_{R2} der Übertragungsstrecken zwischen Port T1/R1 des Netzwerkteilnehmers am "rechten" Rand der Reihe und dem Port T2/R2 des jeweiligen Netzwerkteilnehmers und enthält die Anzahl N_{R1} des Teilnehmers, der das empfangene Port-Select-Telegramm als letzter weitergeleitet bzw. gesendet hat.

Der Datenbereich von Port-Select-Telegrammen, die über Port T1/R1 empfangen werden, enthält die Anzahl N_{R1} der Übertragungsstrecken zwischen dem Port T2/R2 des Netzwerkteilnehmers am "linken" Rand der Reihe und dem Port T1/R1 des jeweiligen Netzwerkteilnehmers sowie die Anzahl N_{R2}, die für den Netzwerkteilnehmer gültig ist, der das empfangene Port-Select-Telegramm als letzter weitergeleitet oder gesendet hat.

Unabhängig davon, über welchen Port ein Port-Select-Telegramm empfangen wurde, enthält es den Wert |N_{R1} - N_{R2}|_{Initiator} beim Initiator des empfangenen Port-Select-Telegramms, die 16-Bit-Adresse Rₖ (0 ≤ k ≤ p, p Anzahl der Reihen) der Reihe, welcher der Initiator des Port-Select-Telegramms angehört, und ein Valid-Bit V für den empfangenen Wert von |N_{R1} - N_{R2}|_{Initiator} und für die Reihenadresse Rₖ. V = 0 bedeutet, daß die empfangenen Werte ungültig sind. Ein derartiges Port-Select-Telegramm wurde von einem Netzwerkteilnehmer in die Reihe eingespeist, der nicht über einen betriebsbereiten Port T3/R3 mit seiner benachbarten Reihe verbunden ist. Bei V = 1 sind die empfangenen Werte gültig. Das Port-Select-Telegramm wurde von einem Netzwerkteilnehmer in die Reihe eingespeist, der über einen betriebsbereiten Port T3/R3 mit einer benachbarten Reihe verbunden ist. Eine Verbindung zur benachbarten Reihe ist betriebsbereit, wenn innerhalb eines parametrierbaren Zeitintervalles Δtₜᵢₘₑₒᵤₜ (Timeout-Intervall) ein Port-Select-Telegramm an Port P3/R3 empfangen wird. Dies ist nur möglich, wenn der Port T3/R3 des Netzwerkteilnehmers der eigenen Reihe und der Port T4/R4 des Netzwerkteilnehmers der benachbarten Reihe jeweils in einem Zustand "link-pass" ist. In diesem Zustand können Telegramme in beiden Richtungen übertragen werden.

Im eingeschwungenen Zustand sendet in jeder Reihe nur noch der Netzwerkteilnehmer zyklisch, d.h. in jedem Meldeintervall Δt_{M}, Port-Select-Telegramme, der als einziger über Port T3/R3 aktiv mit der nächsten Reihe verbunden ist. Damit läßt sich erkennen, ob diese Verbindung zweier Reihen noch aktiv ist. Im folgenden wird ein Verfahren beschrieben, nach welchem dieser Netzwerkteilnehmer bestimmt werden kann:
1. Netzwerkteilnehmer senden weiterzuleitende oder selbst zusammengestellte Port-Select-Telegramme zusätzlich über ihren Port T3/R3.
2. Am Empfang eines Port-Select-Telegramms über den Port T3/R3 erkennt jeder Netzwerkteilnehmer, ob er über diesen Port mit einer anderen Reihe verbunden ist.
   Netzwerkteilnehmer setzen das Valid-Bit V auf eins, wenn über den Port T3/R3 ein Port-Select-Telegramm empfangen wurde.
3. Am Port T3/R3 empfangene Port-Select-Telegramme werden unverändert dem Sender zurückgeschickt. Der Netzwerkteilnehmer speichert zuvor die mit dem Port-Select-Telegramm empfangene Adresse Rₙ der über Port T3/R3 angeschlossenen Reihe.
4. Dem Port T3/R3 ist ein Timeout-Zahler zugeordnet, der mit einem einstellbaren Takt inkrementiert wird. Jedes an Port T3/R3 empfangene Port-Select-Telegramm setzt diesen Zahler zurück. Der Netzwerkteilnehmer setzt das Valid-Bit V auf Null, wenn innerhalb eines parametrierbaren Timeout-Intervalls Δtₜᵢₘₑₒᵤₜ kein Port-Select-Telegramm empfangen wird.
5. Netzwerkteilnehmer senden weiterzuleitende oder selbst zusammengestellte Port-Select-Telegramme zusätzlich über Port T4/R4.
6. Am Empfang eines Port-Select-Telegramms über Port T4/R4 erkennt ein Netzwerkteilnehmer, daß er über diesen Port mit einer anderen Reihe verbunden ist.
7. Am Port T4/R4 empfangene Port-Select-Telegramme werden unverandert dem Sender zurückgeschickt. Der Netzwerkteilnehmer speichert zuvor die mit dem Port-Select-Telegramm empfangene Adresse Rₙ der über Port T4/R4 angeschlossenen Reihe.
8. Netzwerkteilnehmer versenden eigene, d.h. selbst zusammengestellte, Port-Select-Telegramme
   - 8.1.: über Port T1/R1 mit N_{R2} = 1 und Port T2/R2 mit N_{R1} = 1 bei der Initialisierung mit Betrag |N_{R1} - N_{R2}|_{Initiator} = FFH und Valid-Bit V = 1, wenn bereits ein Port-Select-Telegramm über Port T3/R3 empfangen wurde, oder Valid-Bit V = 0, wenn kein Port-Select-Telecramm über Port T3/R3 empfangen wurde.
   - 8.2: über T1/R1 mit N_{R2} = 1 und Port T2/R2 mit (N_{R1}+1), wenn innerhalb eines parametrierbaren Zeitintervalls Δtₜᵢₘₑₒᵤₜ an Port T2/R2 kein Port-Select-Telegramm oder Datentelegramm empfangen wurde. Dem Port T2/R2 ist ein Timeout-Zähler zugeordnet, der mit einem eintellbaren Takt inkrementiert wird. Jedes an Port T2/R2 empfangene Port-Select-Telegramm oder Datentelegramm setzt diesen Zähler zurück.
   - 8.3: über Port T1/R1 mit (N_{R2empf} + 1) und Port T2/R2 mit (N_{R1} + 1), wenn an Port T2/R2 ein Port-Select-Telegramm empfangen wird mit dem empfangenen Wert N_{R2empf} ungleich dem gespeicherten Wert von N_{R2}. Zusatzlich wird N_{R2empf} abgespeichert.
   - 8.4: über Port T2/R2 mit (N_{R1}+1), wenn an Port T2/R2 ein Port-Select-Telegramm empfangen wird mit N_{R1LastSender} ungleich (N_{R1}+1).
   - 8.5: über Port T2/R2 mit N_{R1} = 1 und Port T1/R1 mit (N_{R2}+1), wenn innerhalb eines parametrierbaren Zeitintervalls Δtₜᵢₘₑₒᵤₜ an Port T1/R1 kein Port-Select-Telegramm oder Daten-Telegramm empfangen wurde. Dem Port T1/R1 ist ein Timeout-Zähler zugeordnet, der mit einem einstellbaren Takt inkrementiert wird. Jedes an Port T1/R1 empfangene Port-Select- oder Daten-Telegramm setzt diesen Zähler zurück.
   - 8.6: über Port T2/R2 mit (N_{R1empf}+1) und Port T1/R1 mit (N_{R2}+1), wenn an Port T1/R1 ein Port-Select-Telegramm empfangen wird mit einem empfangenen Wert N_{R1empt} ungleich dem gespeicherten Wert von N_{R1}. Zusätzlich wird N_{R1empf} abgespeichert.
   - 8.7: über Port T1/R1 mit (N_{R2+1}), wenn an Port T1/R1 ein Port-Select-Telegramm empfangen wird mit N_{RZLastSender} ungleich (N_{R2}+1).
9. Netzwerkteilnehmer, die über einen betriebsbereiten Kommunikationskanal über Port T3/R3 an eine andere Reihe angeschlossen sind und ein Port-Select-Telegramm mit einem auf eins gesetzten Valid-Bit V empfangen, vergleichen |N_{R1} - N_{R2}|_{Initiator} vom empfangenen Port-Select-Telegramm mit Betrag |N_{R1} - N_{R2}|ₛ der eigenen Station:
   - 9.1: Ist |N_{R1} - N_{R2}|_{Initiator} < |N_{R1} - N_{R2}|ₛ, so wird
   |N_{R1} - N_{R2}|_{Initiator} im Datenfeld des Port-Select-Telegramms bei der Weiterleitung nicht geändert. Der Netzwerkteilnehmer speichert
   |N_{R1} - N_{R2}|ₘᵢₙ = |N_{R1} - N_{R2}|_{Initiator} und setzt die Adresse A_{stored} = A_{Initiator}. A_{Initiator} ist die Quelladresse des empfangenen Port-Select-Telegramms. Der Wert |N_{R1} - N_{R2}|ₛ ist der Abstand der empfangenden Station von der Reihenmitte.
   - 9.2: Ist |N_{R1} - N_{R2}|_{Initiator} = |N_{R1} - N_{R2}|ₛ, so wird A_{Initiator} mit der eigenen Stationsadresse Aₛ verglichen:
   Bei A_{Initiator} < A ₛ wird das Port-Select-Telegramm ohne Änderung im Datenfeld mit |N_{R1} - N_{R2}|_{Initiator} weitergeleitet. Der Netzwerkteilnehmer speichert
   |N_{R1} - N_{R2}|ₘᵢₙ = |N_{R1} - N_{R2}|ₛ und A_{stored} = A_{Initiator}.
   Ist A_{Initiator} = Aₛ, so wird das empfangene Port-Select-Telegramm herausgefiltert, da dieser Fall nur bei einem Fehler möglich ist.
   Ist A_{Initiator} > Aₛ, so wird das empfangene Port-Select-Telegramm herausgefiltert und ein eigenes Port-Select-Telegramm mit |N_{R1} - N_{R2}|_{Initiator} gesetzt auf |N_{R1} - N_{R2}|ₛ über die Ports T1/R1 und T2/R2 gesendet. Der Netzwerkteilnehmer speichert
   |N_{R1} - N_{R2}|ₘᵢₙ = |N_{R1} - N_{R2}|s, und A_{stored} = Aₛ.
   - 9.3: Ist |N_{R1} - N_{R2}|_{Initiator} > |N_{R1} - N_{R2}|ₛ, so wird das empfangene Port-Select-Telegramm gefiltert und ein eigenes Port-Select-Telegramm mit |N_{R1} - N_{R2}|_{Initiator} gesetzt auf |N_{R1} - N_{R2}|ₛ über die Ports T1/R1 und T2/R2 gesendet. Der Netzwerkteilnehmer speichert
   |N_{R1} - N_{R2}|ₘᵢₙ = |N_{R1} - N_{R2}|ₛ und A_{stored} = Aₛ.
10. Netzwerkteilnehmer, die nicht oder über einen nicht betriebsbereiten Kommunikationskanal über Port T3/R3 an eine andere Reihe angeschlossen sind und ein Port-Select-Telegramm mit einem Valid-Bit V = 1 empfangen, leiten das Telegramm mit dem empfangenen Valid-Bit V und dem Wert |N_{R1} - N_{R2}|_{Initiator} innerhalb der Reihe weiter. Der Netzwerkteilnehmer speichert
   |N_{R1} - N_{R2}|ₘᵢₙ = |N_{R1} - N_{R2}|_{Initiator} und A_{stored} = A_{Initiator}.
11. Netzwerkteilnehmer, die ein Port-Select-Telegramm mit einem Valid-Bit V = 0 empfangen, leiten das Telegramm mit V = 0 und dem Wert |N_{R1} - N_{R2}|_{Initiator} innerhalb der Reihe weiter. Die gespeicherten Werte von |N_{R1} - N_{R2}|ₘᵢₙ und A_{stored} bleiben unverändert.
12. Ein betriebsbereiter Port T3/R3 wird aktiv geschaltet, wenn |N_{R1} - N_{R2}|ₘᵢₙ = |N_{R1} - N_{R2}|ₛ und A_{stored} = Aₛ gespeichert ist. Dies gilt für einen Zeitraum Δt_{rowdelay}, der mindestens der zweifachen Worst-Case-Durchlaufzeit eines Port-Select-Telegramms durch eine Reihe entspricht.
13. Ein aktiver Port T3/R3 eines Netzwerkteilnehmers wird deaktiviert, wenn der Netzwerkteilnehmer innerhalb des Timeout-Intervalls Δtₜᵢₘₑₒᵤₜ kein Port-Select-Telegramm von einer anderen Reihe empfangt. Zusätzlich wird der Kommunikationskanal über den Port T3/R3 zur anderen Reihe als nicht betriebsbereit gekennzeichnet.
   Ein aktiver Port T3/R3 wird ebenfalls deaktiviert, wenn der Netzwerkteilnehmer ein Port-Select-Telegramm empfängt mit |N_{R1} - N_{R2}|_{Initiator} < |N_{R1} - N_{R2}|ₛ oder |N_{R1} - N_{R2}|_{Initiator} = |N_{R1} - N_{R2}|ₛ und A_{Initiator} < Aₛ. Dieser Netzwerkteilnehmer speichert die empfangenen Werte |N_{R1} - N_{R2}|_{Initiator} und A_{Initiator} und leitet das empfangene Telegramm weiter. Der Kommunikationskanal über den Port T3/R3 zur anderen Reihe bleibt betriebsbereit.
14. Netzwerkteilnehmer, die über einen betriebsbereiten Kommunikationskanal über Port T3/R3 an eine andere Reihe angeschlossen sind, senden zyklisch in jedem Meldeintervall Δt_{M} eigene Port-Select-Telegramme.
   - 14.1: über den Port T1/R1 mit (N_{R2}+1) und den Port T2/R2 (N_{R1}+1), wenn ein aktiver Port T3/R3 deaktiviert wird, mit |N_{R1} - N_{R2}|_{Initiator} = FFH ist und Valid-Bit V = 1, bis ein Port-Select-Telegramm eines anderen Netzwerkteilnehmers empfangen wird;
   - 14.2: über den Port T1/R1 mit (N_{R2}+1) und den Port T2/R2 mit (N_{R1}+1), wenn innerhalb eines parametrierbaren Zeitintervalls Δtₜᵢₘₑₒᵤₜ weder an Port T1/R1 noch an Port T2/R2 ein Port-Select-Telegramm oder Datentelegramm von dem Netzwerkteilnehmer mit dem einzigen aktiven Kommunikationskanal zur benachbarten Reihe empfangen wurde, d.h. ein Telegramm mit der Quelladresse A_{stored};
   - 14.3: über den Port T1/R1 mit (N_{R2}+1) und den Port T2/R2 mit (N_{R1}+1), wenn |N_{R1} - N_{R2}|ₘᵢₙ = |N_{R1} - N_{R2}|ₛ und A_{stored} = Aₛ gespeichert ist.

Im eingeschwungenen Zustand des Verfahrens kennt jeder Netzwerkteilnehmer der Reihe den Netzwerkteilnehmer, der über seinen Port T3/R3 mit einer benachbarten Reihe verbunden ist und den kleinsten Abstand von der Reihenmitte hat. Nur über diesen aktiven Kommunikationskanal werden Datentelegramme zwischen den beiden Reihen ausgetauscht. Die Verbindungen der anderen Netzwerkteilnehmer zur nächsten Reihe sind deaktiviert. Figur 7 zeigt ein Netzwerk in diesem eingeschwungenen Zustand.

Soll abweichend von diesem Ausführungsbeispiel der einzige aktive Kommunikationskanal einer Reihe zur benachbarten Reihe am Rand der Reihe liegen, so sind im beschriebenen Verfahren |N_{R1} - N_{R2}|ₘᵢₙ durch |N_{R1} - N_{R2}|ₘₐₓ |N_{R1} - N_{R2}|_{Initiator} < |N_{R1} - N_{R2}|ₛ durch |N_{R1} - N_{R2}|_{Initiator} > |N_{R1} - N_{R2}|ₛ zu ersetzen.

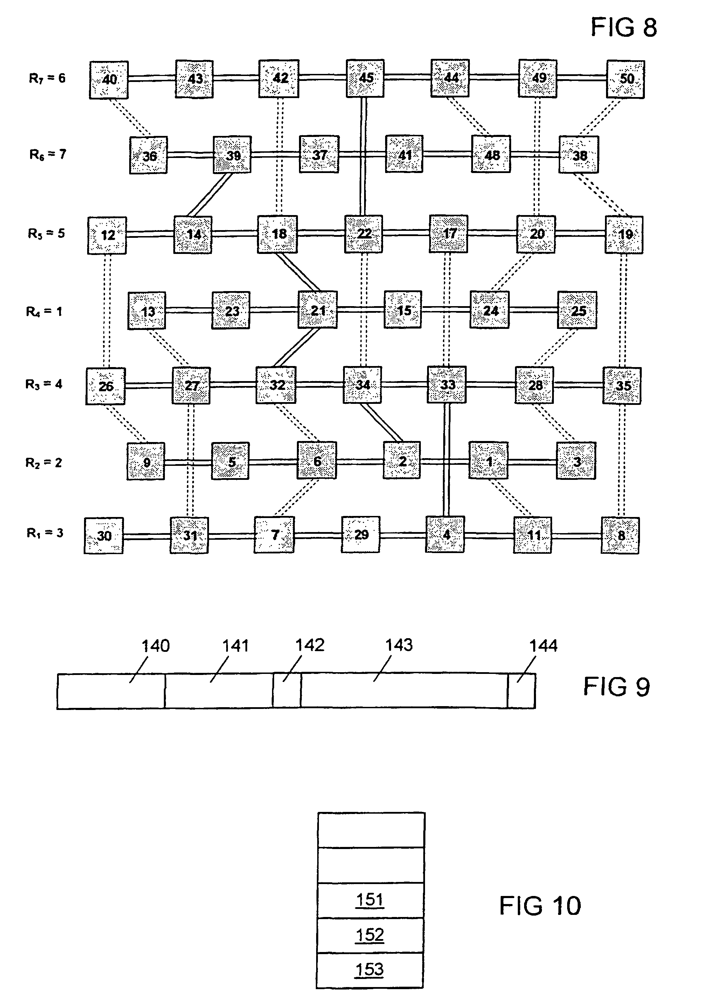

Figur 8 zeigt ein Netzwerk in dreidimensionaler Struktur. Dabei ist die Anordnung der Ports an den einzelnen Kästen, welche jeweils einen Netzwerkteilnehmer mit der eingetragenen Adresse repräsentieren, dieselbe wie in der Darstellung nach Figur 7. Auch die Kommunikationskanäle sind in gleicher Weise dargestellt. Bei einer dreidimensionalen Struktur wird jeweils mit mehreren Netzwerkteilnehmern durch Verbindung der Ports T1/R1 und T2/R2 eine Reihe in linienförmiger Struktur aufgebaut. Mehrere dieser Reihen werden zu einer dreidimensionalen Struktur zusammengeschaltet, wie es in Figur 8 dargestellt ist. Dazu muß zwischen jeweils zwei Reihen mindestens ein Kommunikationskanal über Port T3/R3 und T4/R4 vorhanden sein. Mehrere Kommunikationspfade zwischen jeweils zwei Reihen sind zulässig. An den Ports T3/R3 und T4/R4 der Netzwerkteilnehmer, die nicht für Kommunikationskanäle zwischen Reihen verwendet werden, können Endgeräte angeschlossen werden. Jeder Reihe ist eine eindeutige Reihenadresse Rₖ mit 0 ≤ k ≤ p zugewiesen, wobei p die Anzahl der Reihen der gewählten Netzstruktur ist. Die jeweiligen Reihenadressen sind an der linken Seite von Figur 8 neben der jeweiligen Reihe angegeben. In jedem Netzwerkteilnehmer ist im Parameterregister "Reihenadresse" die zugehörige Adresse der Reihe abgespeichert.
Es muß jedoch sichergestellt sein, daß zwischen zwei beliebigen Netzwerkteilnehmern im gesamten Netzwerk nur ein einziger Kommunikationspfad benutzt wird. Bei mehreren Kommunikationspfaden wurden Schleifen auftreten, d.h. Telegramme könnten sich vervielfachen und zirkulieren. Zur Vermeidung von Schleifen werden Port-Select-Telegramme in Kombination mit einem modifizierten Spanning-Tree-Algorithmus verwendet.

Dazu wird der Datenbereich der Port-Select-Telegramme um die Adresse Rₙ der benachbarten Reihe erweitert, an welche der Port T3/R3 oder der Port T4/R4 des Netzwerkteilnehmers, der das Telegramm zusammengestellt hat, angeschlossen ist.

Aufgabe der um die Reihenadresse Rₙ der benachbarten Reihe erweiterten Port-Select-Telegramme ist, einen Netzwerkteilnehmer zu finden, der über Port T3/R3 mit einer Reihe mit der Adresse Rₙ verbunden ist und bezogen auf die Anzahl der Netzwerkteilnehmer von beiden Enden seiner Reihe möglichst gleich weit entfernt ist, d.h. den kleinsten Abstand von der Reihenmitte hat. Dies definiert den einzigen Netzwerkteilnehmer der Reihe, der über Port T3/R3 potentiell aktiv mit der benachbarten Reihe mit der Adresse Rₙ verbunden ist. Der Port T3/R3 wird von potentiell aktiv auf aktiv umgeschaltet, wenn auch der modifizierte Spanning-Tree-Algorithmus diesen Port aktiv schaltet. Nur über aktive Kommunikationskanäle zwischen den Reihen werden Datentelegramme ausgetauscht. Mit dem zuvor schon für die zweidimensionale Netzwerkstruktur beschriebenen Verfahren läßt sich der Netzwerkteilnehmer finden, der den kleinsten Abstand zur Reihenmitte hat und dessen Port T3/R3 an die Reihe mit der Adresse R_{N} angeschlossen ist. Die Port-Select-Telegramme stellen sicher, daß zwischen zwei über Kommunikationskanäle direkt miteinander verbundenen Reihen zu jeder Zeit immer nur ein Kommunikationskanal über Port T3/R3 potentiell aktiv ist. Damit auch Schleifen, welche über mehr als zwei Reihen geschlossen werden, zuverlässig verhindert werden, stellt ein modifiziertes Spanning-Tree-Verfahren sicher, daß über das gesamte dreidimensionale Netzwerk keine Schleife auftritt. Kennzeichen des modifizierten Spanning-Tree-Verfahrens sind, daß jede Reihe als virtueller Switch, mit den potentiell aktiven Kommunikationskanälen über Ports T3/R3 oder über Ports T4/R4 zu anderen Reihen als Ports des virtuellen Switches angesehen wird und daß ein Kommunikationskanal über einen Port T4/R4 potentiell aktiv ist, wenn er an einen potentiell aktiven Port T3/R3 einer anderen Reihe, die ebenfalls als virtueller Switch angesehen wird, angeschlossen ist. Weiterhin werden in Konfigurationstelegrammen die folgenden Eintrage im Datenfeld vorgesehen:
1. Root_ID: Eine 64-Bit-Adresse R_{R} des virtuellen Switches, der als "Root" angenommen wird.
2. Transmitter_ID: Eine 64-Bit-Adresse R_{T} des virtuellen Switches, zu dem der sendende Netzwerkteilnehmer gehört. Die Adressen R_{R} und R_{T} entsprechen jeweils der Adresse der Reihe, die als virtueller Switch angesehen wird.
3. Cost: Kleinste Reihenanzahl, die ein Telegramm von einem Sender zur Root_ID durchlaufen muß.
4. Port_ID: Eine 16-Bit-Adresse P_{ID} des Ports, über den der sendende virtuelle Switch das Konfigurationstelegramm sendet. R_{PID} ist gleich der Adresse Rₙ der Reihe, die an dem Port angeschlossen ist, über den der virtuelle Switch mit der Transmitter_ID sendet.

Mit diesen Definitionen kann der Spanning-Tree-Algorithmus. auf ein Netzwerk aus virtuellen Switches angewendet werden. Er basiert auf den beschriebenen Konfigurationstelegrammen, die von virtuellen Switches gesendet und empfangen werden. Nur die potentiell aktiven oder aktiven Ports T3/R3 oder T4/R4 einer Reihe, d.h. eines virtuellen Switches, werten empfangene Konfigurationstelegramme aus. Die deaktivierten Ports T3/R3 oder T4/R4 werten die Konfigurationstelegramme aus und filtern sie anschließend. Das Spanning-Tree-Verfahren schaltet die Ports T3/R3 oder T4/R4 von potentiell aktiv auf aktiv um, die sicherstellen, daß zwischen jeweils zwei beliebigen Netzwerkteilnehmern des Netzwerks nur ein einziger Kommunikationspfad existiert und somit keine Schleifen auftreten. Die restlichen Ports T3/R3 oder T4/R4 bleiben potentiell aktiv oder deaktiviert. Nur über aktive Kommunikationskanale zwischen den Reihen werden Datentelegramme ausgetauscht.

Ein virtueller Switch ist an seinen Ports standig für Konfigurationstelegramme empfangsbereit und speichert für jeden Port die Konfigurationsnachricht mit der "besten" Kombination aus Root_ID.Cost.Transmitter_ID.Port_ID. Verglichen werden für jeden Port nicht nur die empfangenen Kombinationen, sondern es wird auch verglichen mit der Kombination, welche der virtuelle Switch an diesen Port versenden würde. Eine Kombination K1 ist "besser" als eine andere Kombination K2, wenn
1. Root_ID von K1 < Root_ID von K2,
2. Root_ID von K1 = Root_ID von K2 und
   Cost von K1 < Cost von K2,
3. Root_ID von K1 = Root_ID von K2 und
   Cost von K1 = Cost von K2 und
   Transmitter_ID von K1 < Transmitter_ID von K2 oder
4. Root_ID von K1 = Root_ID von K2 und
   Cost von K1 = Cost von K2 und
   Transmitter_ID von K1 = Transmitter_ID von K2 und
   Port_ID von K1 < Port_ID von K2.

Der Root-Port eines virtuellen Switches ist der Port mit der "besten" empfangenen Kombination
K_{R} = K_{E} = Root_ID.Cost.Transmitter_ID.Port_ID.

Der Root-Port ist der Port eines virtuellen Switches mit dem kurzesten Abstand zur Root_ID.

Die Kombination des Root-Ports wird über Port-Select-Telegramme allen Netzwerkteilnehmern des virtuellen Switches mitgeteilt. Damit besitzt jeder Netzwerkteilnehmer die notwendigen Informationen, um zu entscheiden, ob ein Port von potentiell aktiv auf aktiv umzuschalten ist. Ein potentiell aktiver Port wird auf aktiv geschaltet, wenn Root_ID.(Cost+1).Transmitter_ID.Port_ID vom Root-Port "besser" ist als Root_ID.Cost.Transmitter_ID.Port_ID vom betrachteten Port.

Die Bedingung, die zur Aktivierung eines Ports eines virtuellen Switches führt, muß für einen Zeitraum Δt_{netdelay} gültig sein, der mindestens der zweifachen Worst-Case-Durchlaufzeit eines Konfigurationstelegramms durch das Netzwerk entspricht, bevor der betreffende Port tatsächlich aktiviert wird. Nur Konfigurationstelegramme, die vom Root-Port empfangen wurden, werden an die aktiven Ports des virtuellen Switches weitergeleitet. Konfigurationstelegramme werden nur über die aktiven Ports T3/R3 gesendet oder weitergeleitet. Die einzigen Empfanger dieser Telegramme sind somit die potentiell aktiven Ports T4/R4 der angeschlossenen virtuellen Switches. Zudem werden Konfigurationstelegramme nur über die aktiven Ports T4/R4 gesendet oder weitergeleitet. Die einzigen Empfänger derartiger Telegramme sind somit die potentiell aktiven Ports T3/R3 der angeschlossenen virtuellen Switches. Jedem Port eines virtuellen Switches ist ein sogenannter Kombinations-Alterungszähler zugeordnet. Dieser Zähler wird mit jedem empfangenen oder weitergeleiteten Konfigurationstelegramm zuruckgesetzt und neu gestartet. Der Kombinations-Alterungszähler ist somit nur bei den potentiell aktiven oder aktiven Ports einer Reihe aktiviert und wird mit einem parametrierbaren Zeittakt inkrementiert. Erreicht der Kombinations-Alterungszähler bei einem potentiell aktiven bzw. einem aktiven Port den parametrierbaren Schwellwert "maximales Alter", so wird die für diesen Port gespeicherte Kombination Root_ID.Cost.Transmitter_ID. Port_ID gelöscht und neu berechnet.

Der Informationsaustausch innerhalb eines virtuellen Switches, d.h. innerhalb einer Reihe von Netzwerkteilnehmern mit linienförmiger Struktur, erfolgt mit Port-Select-Telegrammen, die den oben beschriebenen Port-Select-Telegrammen eines Netzwerks mit zweidimensionaler Struktur ähnlich sind. Der Datenbereich der Port-Select-Telegramme eines Netzwerks mit dreidimensionaler Struktur wird unabhängig vom empfangenden Port gegenüber dem Datenbereich der Port-Select-Telegramme für ein Netzwerk mit zweidimensionaler Struktur erweitert um eine 16-Bit-Adresse Rₙ des über Port T3/R3 angeschlossenen virtuellen Switches, d.h. der benachbarten Reihe, deren Gültigkeit durch das bereits beschriebene Valid-Bit V angezeigt wird. Bei V = 0 ist auch der empfangene Wert der Reihenadresse Rₙ ungültig. Das Port-Select-Telegramm wurde von einem Netzwerkteilnehmer in den virtuellen Switch eingespeist, der über einen betriebsbereiten Port T4/R4 mit dem virtuellen Switch verbunden ist. Bei V = 1 ist die Adresse Rₙ gültig. Zusätzlich ist in dem Datenbereich des Port-Select-Telegramms ein Potentiell-Aktiv-Bit P_{pA} eingefügt. Abhängig vom empfangenden Port hat dieses Bit zwei Bedeutungen:
1. P_{pA} in Port-Select-Telegrammen, die an Port T4/R4 empfangen wurden, informiert den Netzwerkteilnehmer, ob der Port T3/R3 des sendenden Netzwerkteilnehmers des angeschlossenen virtuellen Switches potentiell aktiv oder aktiv (P_{pA} = 1) oder deaktiviert (P_{pA} = 0) ist.
2. P_{pA} in Port-Select-Telegrammen, die an Port T1/R1 oder Port T2/R2 empfangen wurden, informiert den Netzwerkteilnehmer, ob der Port T4/R4 des Initiators des Port-Select-Telegramms potentiell aktiv oder aktiv (P_{pA} = 1) oder deaktiviert (P_{pA} = 0) ist.

Weiterhin wird der Datenbereich des Port-Select-Telegramms um eine 16-Bit-Adresse Rᵢ des über Port T4/R4 angeschlossenen virtuellen Switches erweitert. Der Wert der Adresse ist nur nötig, wenn P_{pA} = 1 gesetzt ist.

Zudem wird in den Port-Select-Telegrammen ein Wert eines Aktiv-Timers zum Sendezeitpunkt übertragen. Der Aktiv-Timer mißt die Zeit, die seit dem letzten Empfang eines Port-Select-Telegramms über Port T4/R4 mit gesetztem Potentiell-Aktiv-Bit, d.h. mit P_{pA} = 1, vergangen ist. Der Wert des Aktiv-Timers ist nur gültig, wenn P_{pA} = 1 ist.

Weiterhin enthält der Datenbereich von Port-Select-Telegrammen für dreidimensionale Netzwerkstruktur die beste empfangene Kombination für diesen Port
K_{E} = Root_ID.Cost.Transmitter_ID. Port_ID,
die im Datenfeld eines Konfigurationstelegramms gesendet oder weitergeleitet wurde von einer an einem potentiell aktiven oder aktiven Port T3/R3 oder T4/R4 angeschlossenen Reihe mit der Adresse Rₙ oder Rᵢ.

Zudem wird die beste bisher bekannte Kombination an den potentiell aktiven oder aktiven Port T3/R3 und T4/R4 der Reihe, d.h. des virtuellen Switches, im Datenfeld von Port-Select-Telegrammen übertragen:
K_{R} = Root_ID.Cost.Transmitter_ID.Port_ID.

Ein Netzwerkteilnehmer, der an einem deaktivierten Port T4/R4 ein Port-Select-Telegramm von einem potentiell aktiven oder aktiven Port T3/R3, d.h. ein Port-Select-Telegramm mit P_{pA} = 1, einer anderen Reihe empfängt, schaltet den Port T4/R4 auf potentiell aktiv bzw. aktiv und sendet eine parametrierbare Anzahl von Port-Select-Telegrammen mit P_{pA} = 1.

Den Ports T4/R4 ist jeweils ein Aktiv-Timer zugeordnet, der mit einem einstellbaren Takt inkrementiert wird. Der Aktiv-Timer mißt die Zeit seit dem letzten Empfang eines Port-Select-Telegramms mit gesetztem Potentiell-Aktiv-Bit P_{pA} = 1. Jedes über Port T4/R4 empfangene Port-Select-Telegramm mit gesetztem Potentiell-Aktiv-Bit P_{pA} = 1 setzt den Aktiv-Timer zuruck und startet ihn neu. Empfangene Port-Select-Telegramme mit P_{pA} = 0 setzen den Aktiv-Timer zurück, ohne ihn zu starten.

Ein Netzwerkteilnehmer mit einem potentiell aktiven oder aktiven Port T4/R4 deaktiviert diesen Port, wenn
1. über Port T4/R4 ein Port-Select-Telegramm mit P_{pA} = 0 empfangen wird,
2. über Port T1/R1 oder T2/R2 ein Port-Select-Telegramm empfangen wird mit P_{pA} = 1 und einem empfangenen Wert des Aktiv-Timers, der kleiner als die eigene Aktivzeit ist, wobei der eigene Aktiv-Timer in diesem Fall zurückgesetzt wird, ohne neu gestartet zu werden, oder
3. die vom Aktiv-Timer gemessene Zeit einen parametrierbaren Maximalwert erreicht.

Im eingeschwungenen Zustand senden in jedem virtuellen Switch, d.h. in jeder Reihe, alle Netzwerkteilnehmer mit einer potentiell aktiven T3/R3-Verbindung zu einer benachbarten, über die Ports T3/R3 angeschlossenen Reihe zyklisch in jedem Meldeintervall Δt_{M} jeweils ein Port-Select-Telegramm über die Ports T1/R1 und T2/R2.

Zusätzlich senden in jedem virtuellen Switch folgende Netzwerkteilnehmer ein Port-Select-Telegramm über die Ports T1/R1 und T2/R2:
1. jeder Netzwerkteilnehmer bei der Initialisierung mit K_{R} = K_{E} = Quelladresse.0.Quelladresse.Port_ID,
2. jeder Netzwerkteilnehmer mit einem potentiell aktiven Kommunikationskanal über den Port T3/R3 zu einer Reihe mit der Adresse Rₙ, wenn er ein Konfigurationstelegramm über Port T3/R3 empfängt,
3. jeder Netzwerkteilnehmer mit einem potentiell aktiven Kommunikationskanal über Port T4/R4 zu einer Reihe mit der Adresse Rᵢ, wenn er ein Konfigurationstelegramm über Port T4/R4 empfangt,
4. jeder Netzwerkteilnehmer, bei dem der Kombinations-Alterungszähler eines potentiell aktiven oder aktiven Ports den Schwellwert "maximales Alter" erreicht, wobei die für diesen Port gespeicherten Kombinationen K_{E} und K_{R} gelöscht und neu berechnet werden und wobei zunächst ein Port-Select-Telegramm mit
   K_{R} = K_{E} = Quelladresse.0.Quelladresse.Port_ID
   gesendet wird,
5. jeder Netzwerkteilnehmer mit einem potentiell aktiven oder aktiven Port, dessen gespeicherte Kombination K_{R} "besser" ist als die Kombination K_{R} im empfangenen Port-Select-Telegramm, wobei die für diesen Port gespeicherte Kombination K_{R} gelöscht und neu berechnet wird und wobei ein Port-Select-Telegramm mit der besten bisher empfangenen Kombination für diesen Port
   K_{E} = Root_ID.Cost.Transmitter_ID. Port_ID und mit
   K_{R} = min{K_{E}, empfangener Wert von K_{R}} gesendet wird und
6. jeder Netzwerkteilnehmer, dessen Port T4/R4 von deaktiviert auf potentiell aktiv oder aktiv umgeschaltet wird, sendet eine parametrierbare Anzahl von Port-Select-Telegrammen mit P_{pA} = 1.
Alle Empfänger eines Port-Select-Telegramms mit einem deaktivierten Kommunikationskanal zu einer anderen Reihe speichern die vom zugehörigen potentiell aktiven oder aktiven Port des virtuellen Switches gesendeten Werte K_{E} und K_{R}.

Figur 8 zeigt das Ergebnis der Anwendung der Port-Select-Telegramme in Kombination mit dem modifizierten Spanning-Tree-Verfahren auf jede Reihe des dargestellten dreidimensionalen Netzwerks.

Eine Redundanz im Netzwerk soll sicherstellen, daß physikalische Fehler, elektromagnetische Storungen, Netzwerkerweiterungen oder ein Komponentenaustausch die Kommunikation zwischen den Netzwerkkomponenten nicht beeinträchtigen. Voraussetzung hierfür ist nicht nur eine schnelle Erkennung von Fehlern oder Netzwerkmodifikationen und eine schnelle Netzrekonfiguration, sondern auch ein möglichst kleiner Netzwerkbereich, der während der Rekonfigurationszeit von den Auswirkungen des Fehlers oder der Netzwerkmodifikation betroffen ist.

Durch die Redundanzverwaltung ist eine Redundanz innerhalb jeder Reihe eines Netzwerks, bezüglich der Kommunikationskanäle zwischen jeweils zwei miteinander verbundenen Reihen und eine Redundanz in bezug auf das gesamte Netzwerk möglich. Dabei ist Schleifenfreiheit durch den modifizierten Spanning-Tree-Algorithmus gewährleistet.

Diese Art der Redundanz ermöglicht in vorteilhafter Weise kurze Rekonfigurationszeiten bei minimalem Hardwareaufwand und ist deshalb mit geringem Aufwand realisierbar. Zudem wird der Netzwerkbereich begrenzt, der während der Rekonfigurationszeit an den Auswirkungen eines Fehlers oder von einer Netzwerkkonfiguration betroffen ist.

Um Redundanz in einer Reihe linienförmig verschalteter Netzwerkteilnehmer zu gewahrleisten, wird ein Ring gebildet, wie es in Figur 6 beispielsweise mit den Netzwerkteilnehmern 100 ... 107 der Fall ist. Ein Netzwerkteilnehmer, beispielsweise der Netzwerkteilnehmer 100, der sich an einem Ende der Reihe befindet, muß im Redundanz-Mode betrieben werden. Er hat die Funktion eines Redundanz-Managers.

Durch Setzen eines Redundanzbits im Parameterregister wird dieser Netzwerkteilnehmer in dem Redundanz-Mode geschaltet. Zur Überprüfung der Reihe sendet er an Port 1 zyklisch ein Telegramm Test1 mit der MAC-Adresse des Ports 1 als Quelladresse. Die Zykluszeit beträgt beispielsweise 10 ms. An Port 2 wird zyklisch ein Telegramm Test2 mit der MAC-Adresse des Ports 2 als Quelladresse versendet. Die Zykluszeit beträgt ebenfalls beispielsweise 10 ms. Das Test2-Telegramm wird um die halbe Zykluszeit versetzt versendet, somit 5 ms nach dem Telegramm Test1. Ist die Reihe nicht unterbrochen, werden die am Port 1 versendeten Telegramme Test1 am Port 2 wieder empfangen und ebenso die Test2-Telegramme in umgekehrter Richtung. In diesem Fall ist der Kommunikationskanal zwischen den beiden Ports 1 und 2 innerhalb des Netzwerkteilnehmers, der als Redundanz-Manager betrieben wird, aufgetrennt, so daß alle am Port 2 empfangenen Datentelegramme herausgefiltert und von den am Port 1 empfangenen Telegrammen nur die an die eigene Stationsadresse gerichteten akzeptiert werden.

Der als Redundanz-Manager betriebene Netzwerkteilnehmer schließt den Ring, d.h. er leitet empfangene Telegramme zwischen dem Port 1 und 2 weiter, wenn innerhalb eines parametrierbaren Zeitintervalles von beispielsweise 100 ms an einem der beiden Ports kein Testtelegramm empfangen wird oder wenn ein Telegramm "link-down" von einem Netzwerkteilnehmer der jeweiligen Reihe empfangen wird, der eine Unterbrechung des Kommunikationskanals zum nächsten Netzwerkteilnehmer festgestellt hat. Der von der Unterbrechung betroffene Port des Netzwerkteilnehmers wird deaktiviert. Voraussetzung für die Reaktivierung dieses Ports ist die Wiederherstellung der Verbindung zum anderen Netzwerkteilnehmer für eine bestimmte Mindestzeit von beispielsweise 1,6 s oder der Empfang eines Telegramms "link-up" vom Redundanz-Manager. Mit dem Schließen des Rings wird an den Ports 1 und 2 des Redundanz-Managers ein Telegramm "link-down" verschickt, um alle anderen Netzwerkteilnehmer der Reihe über die neue Reihenstruktur zu informieren. Testtelegramme werden weiterhin zyklisch versendet.

Der als Redundanz-Manager betriebene Netzwerkteilnehmer öffnet den Ring, wenn wieder ein Testtelegramm über die bisher unterbrochene Strecke empfangen wird oder wenn ein Telegramm "link-up" vom Netzwerkteilnehmer der Reihe empfangen wird, dessen Kommunikationskanal zum benachbarten Netzwerkteilnehmer seit einer bestimmten Mindestzeit von beispielsweise 1,6 s nicht mehr unterbrochen ist. Mit dem Öffnen des Rings wird an den Ports 1 und 2 des Redundanz-Managers ein Telegramm "link-up" verschickt, um alle anderen Netzwerkteilnehmer der Reihe über die neue Ringstruktur zu informieren. Testtelegramme werden weiterhin zyklisch versendet. Jeder Netzwerkteilnehmer der Reihe setzt mit dem Empfang eines "link-up" oder "link-down"-Telegramms die für die Telegrammweiterleitung notwendigen Register zurück.

Eine redundante Ausfuhrung der Kommunikationskanäle zwischen zwei Reihen erfordert mindestens zwei getrennte Kommunikationspfade. Für den Datenaustausch zwischen den Reihen darf jedoch maximal ein einziger Pfad verwendet werden. Die Auswahl dieses potentiell aktiven Kommunikationskanals zwischen zwei Reihen erfolgt mit Hilfe von Port-Select-Telegrammen. Ist ein potentiell aktiver Kommunikationskanal als fehlerhaft erkannt, wird dieser deaktiviert und ein anderer Kommunikationspfad auf potentiell aktiv geschaltet. Für die Umschaltzeit von deaktiviert auf potentiell aktiv gilt: Umschaltzeit ≥ Δtₜᵢₘₑₒᵤₜ + Δt_{rowdelay}, wobei Δtₜᵢₘₑₒᵤₜ das Timeout-Intervall ist und Δt_{rowdelay} der zweifachen Worst-Case-Durchlaufzeit eines Port-Select-Telegramms durch die Reihe entspricht. Die Umschaltzeit ist somit von der Anzahl der Netzwerkteilnehmer, die eine Reihe bilden, abhängig. Sie liegt z.B. für eine Reihe aus 50 Netzwerkteilnehmern in der Größenordnung von 200 ms, wenn ein Timeout-Zeitintervall von 150 ms angenommen wird.

Zudem ist eine Redundanz in einem dreidimensionalen Netzwerk möglich. Ist die Schleifenfreiheit bereits durch die Netzwerkstruktur gegeben, d.h. existiert keine Netzwerkredundanz, so ist jeder potentiell aktive Kommunikationspfad zwischen zwei Reihen auch aktiv. In diesem Fall ist die Anwendung des beschriebenen modifizierten Spanning-Tree-Algorithmus nicht erforderlich. Bei Netzwerkredundanz stellt der modifizierte Spanning-Tree-Algorithmus Schleifenfreiheit zwischen den Reihen sicher. Eine Rekonfiguration eines Netzwerks mit dem modifizierten Spanning-Tree-Algorithmus ist nur bei Fehlern oder Netzwerkmodifikationen erforderlich, die nicht durch die Redundanz innerhalb einer Reihe oder die Redundanz der Kommunikationskanale zwischen zwei Reihen bearbeitet werden.
Bei einem Netzwerk mit derartigen Netzwerkteilnehmern ist die Übertragungszeit vom Sender zum Empfänger von der Anzahl der Netzwerkteilnehmer, über welche ein Telegramm weitergeleitet wird, abhängig und kann nicht vernachlässigt werden. Die Übertragungszeit eines Telegramms erhöht sich bei jedem Netzwerkteilnehmer, der das Telegramm weiterleitet, um eine teilnehmerspezifische Delay-Time Δtᵢ, die aus den folgenden Zeiten zusammengesetzt ist:
1. Durchlaufzeit durch den Physical-Layer-Baustein, beispielsweise den Baustein 36 in Figur 2, in Empfangsrichtung vom Empfang des ersten Bits eines Nibbles bis das Nibble am MII mit in "RX_DV = 1" als gültig ausgegeben wird. Diese Zeit beträgt beispielsweise 21 T_{Bit} für DP83843 PHYTER von NSC, wobei T_{Bit} bei 10 MBaud-Übertragungsrate 100 ns und bei 100 MBaud-Übertragungsrate 10 ns entspricht.
2. Aufenthaltszeit im Netzwerkteilnehmer vom Empfang eines Nibbles bis zum Versenden desselben Nibbles. Falls der Teilnehmer gerade ein eigenes Telegramm versendet und im Receive-Buffer bereits ein Telegramm eingetragen ist, kann die Datenweiterleitung im Vergleich zum ungestörten Betrieb um bis zu (3k x 8) x T_{Bit} verzögert werden.
3. Durchlaufzeit durch den Physical-Layer-Baustein, über welchen das Telegramm in Senderichtung weitergeleitet wird, von der ersten steigenden Flanke eines Transmit-Clocksignals nach dem Bereitstellen eines Nibbles am MII bis zum ersten gesendeten Bit dieses Nibbles. Diese Durchlaufzeit beträgt beispielsweise für DP83843 PHYTER von NSC 6 T_{Bit}.
4. Laufzeit über die Leitungen zwischen zwei benachbarten Netzwerkteilnehmern.
Die Summe der unter 1, 3 und 4 angegebenen Zeiten ist eine feste Größe und wird als Durchlaufzeit Δt_{DLZ} bezeichnet. Sie kann entweder parametriert oder von den Netzwerkteilnehmern ausgemessen werden. Eine Änderung dieser Durchlaufzeit Δt_{DLZ} ist nur möglich, wenn ein Netzwerkteilnehmer aus dem Netzwerk entfernt oder in das Netzwerk hinzugefügt oder wenn die Verkabelung geändert wird.

Mit der folgenden Sequenz von Telegrammen, welche Netzwerkteilnehmer beispielsweise nach der Initialisierung oder auf Anforderung ausführen, kann die Durchlaufzeit Δt_{DLZ} bestimmt werden:
1. Jeder Netzwerkteilnehmer, der neu in das Netzwerk aufgenommen wird, sendet seinen vier benachbarten Netzwerkteilnehmern jeweils ein sogenanntes DLZ-Telegramm, d.h. ein erstes Telegramm zur Laufzeitermittlung. Dieses Telegramm ist in der 16-Bit-Type-Adresse eindeutig gekennzeichnet.
2. Der neue Netzwerkteilnehmer startet einen DLZ-Timer 1, nachdem das letzte Nibble des Type-Feldes des DLZ-Telegramms dem Media-Independent-Interface (MII) des Ports 1 zum Versenden zur Verfügung gestellt wurde. Entsprechend startet er einen DLZ-Timer 2, 3 und 4 für das Versenden über die Ports 2, 3 bzw. 4.
3. Jeder der maximal 4 benachbarten Netzwerkteilnehmer startet nach dem Empfang des letzten Nibbles des Type-Feldes des DLZ-Telegramms an seinem MII seinen DLZ-Timer des jeweiligen Ports. Das empfangene DLZ-Telegramm wird nicht weitergeleitet, sondern dem Sender ergänzt um die Aufenthaltszeit in den jeweiligen Ethernet-Kontroller des Netzwerkteilnehmers wieder zurückgeschickt. Hat dieser benachbarte Netzwerkteilnehmer das letzte Nibble des Type-Feldes des auf diese Art modifizierten DLZ-Telegramms seinem zu dem neu zugeschalteten Netzwerkteilnehmer gerichteten MII ubergeben, halt er den DLZ-Timer an und sendet die im DLZ-Timer gespeicherte Aufenthaltszeit mit dem Datenfeld des Telegramms zu dem neu zugeschalteten Netzwerkteilnehmer.
4. Der neu in das Netzwerk aufgenommene Netzwerkteilnehmer stoppt mit dem Empfang des letzten Nibbles des Type-Feldes an seinem MII des jeweiligen Ports den zugeordneten DLZ-Timer 1, 2, 3 bzw. 4.
5. Beispielsweise für Port 1 des neu zugeschalteten Netzwerkteilnehmers kann die Durchlaufzeit Δt_{DLZ1} berechnet werden nach der Formel: Δt_{DLZ1} = (T_{DR}-T_{DA}) : 2,
   mit T_{DR} - mit dem DLZ-Timer 1 gemessene Antwortzeit und T_{DA} - gemessene Aufenthaltszeit im benachbarten Netzwerkteilnehmer.
   In entsprechender Weise werden die Durchlaufzeiten Δt_{DLZ1}, Δt_{DLZ3} und Δt_{DLZ4} für die übrigen Ports des neu in das Netzwerk eingefügten Netzwerkteilnehmers berechnet. Die so ermittelten Durchlaufzeiten werden im Modul 52 (Figur 2) als Parameter hinterlegt.
6. Der neu zugeschaltete Netzwerkteilnehmer sendet mit einem weiteren Telegramm die gemessenen Durchlaufzeiten über den jeweils zugeordneten Port an die benachbarten Netzwerkteilnehmer.

Die beschriebene Ermittlung der Durchlaufzeiten ist bei der Initialisierung eines Netzwerks nur bei jedem zweiten Netzwerkteilnehmer erforderlich.
Eine Uhrzeitsynchronisation hat die Aufgabe, die Uhren mehrerer oder aller Netzwerkteilnehmer zu synchronisieren.

Dabei werden vorteilhaft die Kommunikationskanäle zwischen Netzwerkteilnehmern im Vollduplex-Mode betrieben, damit die Übertragung von Telegrammen deterministisches Verhalten zeigt.

Die Übertragungszeit von einem Sender zu einem Empfänger ist in einem Netzwerk von der Anzahl der Netzwerkteilnehmer, über welche das Telegramm geleitet wird, abhangig und kann nicht vernachlässigt werden.

Eine Uhrzeitsynchronisation kann beispielsweise mit zwei speziellen Telegrammen durchgeführt werden. Figur 9 zeigt den allgemeinen Aufbau eines Telegramms. Ein erstes Feld 140 enthält eine Destination-Adresse, d.h. eine Adresse der Teilnehmer, an welche das Telegramm gerichtet ist, von beispielsweise 48 Bit Länge. Ein zweites Feld 141 enthalt eine Source-Adresse, die Adresse des jeweils sendenden Netzwerkteilnehmers, deren Länge ebenfalls beispielsweise 48 Bit beträgt. In einem Type-Feld 142 mit beispielsweise 16 Bit wird eine Kennung des Telegramms übertragen. Die Nutzdaten des Telegramms werden in einem Datenfeld 143 variabler Länge gesendet. Beendet wird das Telegramm durch eine Check-Sequence von 144, die im wesentlichen zur Überprüfung der Ubertragungsqualität dient. Telegramme zur Uhrzeitsynchronisation können durch eine besondere Multicast-Adresse als Destination-Adresse 140 und/oder durch eine neu zu definierende Type-Adresse im Type-Feld 142 gekennzeichnet werden.

Figur 10 zeigt eine Auftragsliste, die beispielsweise im RAM 22 in Figur 2 abgelegt sein kann. In eine derartige Auftragsliste werden Telegramme, die über das Netzwerk übertragen werden sollen, eingetragen. Wenn keine Priorisierung der Übertragung vorgesehen ist, wird jeweils das untenstehende Telegramm als nächstes übertragen. Es kann somit vorkommen, daß beispielsweise ein fertiggestelltes Telegramm 151 erst dann übertragen wird, wenn zwei zuvor in die Auftragsliste eingetragene Telegramme 152 und 153 übertragen wurden. Je nach Menge der anstehenden Aufträge ist daher die Sendeverzögerungszeit eines Telegramms in einem Netzwerkteilnehmer nach seinem Eintrag in die Auftragsliste variabel. Im folgenden wird eine Möglichkeit beschrieben, wie der Einfluß der Sendezeitverzögerung bei der Uhrzeitsynchronisation vermieden werden kann:
1. Bei einem Uhrzeit-Master, d.h. ein Netzwerkteilnehmer, auf dessen Uhr die Uhren der übrigen Netzwerkteilnehmer synchronisiert werden, trägt ein SM-Time0 Telegramm, ein erstes Telegramm zur Uhrzeitsynchronisation, in eine Auftragsliste ein, startet für jeden Port P, P = 1, 2, 3, 4, einen Delay-Timer und merkt sich die Startzeit dieser Timer.
2. Der Delay-Timer von jedem Port P, P = 1, 2, 3, 4, wird beim Uhrzeit-Master angehalten, nachdem das letzte Nibble des Type-Feldes des SM-Time0 Telegramms dem MII des jeweiligen Ports zum Versenden zur Verfügung gestellt wurde. Damit ist die Sendeverzögerungszeit bestimmt. Ein Nibble ist definiert als ein halbes Byte, d.h., es ist eine Folge von 4 Bit.
3. Jeder benachbarte Netzwerkteilnehmer startet nach dem Empfang des letzten Nibbles des Type-Feldes des SM-Time0 Telegramms am MII seines Ports P, P = 1, 2, 3 oder 4, seinen Delay-Timer mit dem Wert der jeweiligen Durchlaufzeit Δt_{DLZp}, die zuvor nach dem oben beschriebenen Verfahren gemessen oder von einem Bediener eingegeben wurde. Zusätzlich wird die Adresse des Uhrzeit-Masters, die im SM-Time0 Telegramm als Source-Adresse empfangen wurde, gespeichert.
4. Zu dem Zeitpunkt, zu welchem der benachbarte Netzwerkteilnehmer das letzte Nibble des Type-Feldes des SM-Time0 Telegramms zur Weiterleitung an das MII eines anderen Ports anlegt, wird der Wert des Delay-Timers, der dem Port P, P = 1, 2, 3 bzw. 4, zugeordnet ist, abgespeichert. Die Delay-Timer laufen jedoch weiter. Die gespeicherten Delay-Times der Ports entsprechen jeweils der oben definierten Übertragungszeit Δtᵢ dieses Netzwerkteilnehmers. Durch den Startwert Δt_{DLZp} des Delay-Timers ist die Laufzeit des Telegramms über die physikalische Übertragung bereits hinzuaddiert.
5. Anschließend trägt der Uhrzeit-Master ein SM-Time1 Telegramm, das im Datenfeld die Startzeit der Delay-Timer enthält, in die Auftragsliste ein. Bevor er dieses SM-Time1 Telegramm über einen Port P, P = 1, 2, 3, 4, sendet, ersetzt er die Startzeit der Delay-Timer durch die Uhrzeit, zu welcher das letzte Nibble des Type-Feldes des SM-Time0 Telegramms dem MII dieses Ports zum Versenden zur Verfugung gestellt wurde, d.h. durch die Summe der Startzeit der Delay-Timer und der gemessenen Delay-Time des jeweiligen Ports P. In das SM-Time1 Telegramm wird somit die um die Sendezeitverzögerung korrigierte Uhrzeit eingetragen.
6. Jeder benachbarte Netzwerkteilnehmer, der ein SM-Time1 Telegramm empfängt, addiert jeweils die gespeicherte Delay-Time Δt, des zuvor über Port P, P = 1, 2, 3 bzw. 4, weitergeleiteten SM-Time0 Telegramms zu der im SM-Time1 Telegramm empfangenen Uhrzeit und sendet die so erhaltene Zeit mit einem aktualisierten SM-Time1 Telegramm über einen anderen Port zum nachsten Nachbar. SM-Time1 Telegramme werden nur von dem Netzwerkteilnehmer akzeptiert, der zuvor ein SM-Time0 Telegramm gesendet hatte.

Mit dem Empfang des SM-Time1 Telegramms kennt der Uhrzeit-Slave, d.h. der benachbarte Netzwerkteilnehmer, die Startzeit seines Delay-Timers. Die synchronisierte Uhrzeit ergibt sich aus der Summe der im SM-Time1 Telegramm empfangenen Uhrzeit und der Delay-Time des Uhrzeit-Slaves für den jeweils empfangenden Port. Somit korrigiert der benachbarte Netzwerkteilnehmer die im zweiten Telegramm empfangene Uhrzeit um die Laufzeit und die Empfangszeitverzögerung.

Mit dem folgenden Ablauf ist alternativ zu der oben beschriebenen Möglichkeit eine Uhrzeitsynchronisation mit nur einem Telegramm moglich:
1. Ein Uhrzeit-Master startet die den Ports zugeordneten Delay-Timer und trägt das Uhrzeittelegramm mit der Startzeit dieser Timer in die Auftragsliste ein.
2. Der Delay-Timer jedes Ports P, P = 1, 2, 3, 4, wird beim Uhrzeit-Master angehalten, nachdem das letzte Nibble des Type-Feldes des Uhrzeittelegramms dem Media-Independent-Interface von Port P zum Versenden zur Verfügung gestellt wurde, d.h. nachdem das letzte Nibble des Type-Feldes zur physikalischen Übertragung bereitgestellt wurde. Der Netzwerkteilnehmer addiert daraufhin die im Uhrzeittelegramm angegebene Startzeit der Delay-Timer zum Wert des Delay-Timers des jeweiligen Ports P und versendet diese Summe als um die Sendezeitverzögerung korrigierte Uhrzeit mit einem ersten Telegramm zur Uhrzeitsynchronisation über den jeweiligen Port P.
3. Jeder benachbarte Netzwerkteilnehmer startet nach dem Empfang des letzten Nibbles des Type-Feldes des ersten Telegramms zur Uhrzeitsynchronisation an einem Port P, P = 1, 2, 3 oder 4, seinen zugeordneten Delay-Timer mit dem Wert der jeweiligen Durchlaufzeit Δt_{DLZP}. Er mißt somit die Zeitverzögerung seit Empfang des ersten Telegramms.
4. Zu dem Zeitpunkt, zu welchem der benachbarte Netzwerkteilnehmer das letzte Nibble des Type-Feldes des ersten Telegramms zur Uhrzeitsynchronisation zur Weiterleitung an das MII eines Ports anlegt, wird der Wert des Delay-Timers, der diesem Port zugeordnet ist, abgespeichert. Die Delay-Timer laufen jedoch weiter. Die gespeicherten, den einzelnen Ports zugeordneten Delay-Times entsprechen jeweils der Übertragungszeit Δtᵢ dieses Netzwerkteilnehmers. Sie wird jeweils zur empfangenen Startzeit der Delay-Timer addiert und mit einem zweiten Telegramm zur Uhrzeitsynchronisation über einen anderen Port zum nächsten, d.h. einem dritten, Netzwerkteilnehmer weitergeleitet.

Mit dem Empfang eines ersten oder zweiten Telegramms zur Uhrzeitsynchronisation kennt der Uhrzeit-Slave die Startzeit seines Delay-Timers. Die synchronisierte Uhrzeit ergibt sich aus der Summe der in einem ersten oder zweiten Telegramm empfangenen Uhrzeit und der Delay-Time des Uhrzeit-Slaves für den empfangenden Port P.

Die beschriebenen Möglichkeiten zur Uhrzeitsynchronisation können in entsprechender Weise zur Synchronisation von Äquidistanz-Timern in den Netzwerkteilnehmern dienen. Aufgabe von Äquidistanz-Timern ist es, mehreren oder allen Netzwerkteilnehmern zu ermöglichen, vorgegebene Aktionen äquidistant auszuführen. Bei Regelungssystemen wird diese Funktion häufig als "elektronische Welle" bezeichnet. Es soll bei allen Netzwerkteilnehmern, die über das Netzwerk miteinander verbunden sind, ein Taktschläger generiert werden, mit dessen Takt jeweils Soll-Werte übergeben und Ist-Werte abgefragt werden. Ein Anwendungsbeispiel ist die Messung der elektrischen Leistung, wenn die dazu erforderlichen Strom- und Spannungsmeßwerte von getrennten Meßumformern erfaßt und über ein Netzwerk abgefragt werden.

Vorausgesetzt wird, daß ein äquidistanter Zyklus von nur einem Äquidistanz-Master gesteuert wird. Der Netzwerkteilnehmer, der die Funktion eines Aquidistanz-Masters übernimmt, besitzt einen Timer, der beim Start mit dem parametrierbaren Wert des Äquidistanz-Intervalls geladen wird. Der Timer ist freilaufend und wird mit jedem Bittakt dekrementiert. Ist der Timer abgelaufen, wird er wieder mit dem parametrierten Wert des Äquidistanz-Intervalls geladen und ein neuer Zyklus beginnt. Ein Unterschied eines Äquidistanz-Timers gegenüber einer Uhr ist somit die Laufrichtung. Zur Korrektur eines mit Telegrammen übertragenen Timer-Standes müssen daher die Zeitverzögerungen nicht wie bei der Uhrzeit addiert, sondern subtrahiert werden. Der oben verwendete Begriff "UhrzeitSynchronisation" soll daher so verstanden werden, daß er auch die Synchronisation von Äquidistanz-Timern einschließt.

Für eine Synchronisation äquidistanter Aktionen gibt es beispielsweise folgende Möglichkeit:
1. Der Äquidistanz-Master trägt das Äquidistanz-Telegramm in die Auftragsliste ein. Er speichert jeweils den Wert des Äquidistanz-Timers ab, wenn das letzte Nibble des Type-Feldes des Äquidistanz-Telegramms an den MII der vier Ports P, P = 1, 2, 3, 4, übergeben wird, d.h. zur physikalischen Übertragung bereitgestellt wird. Dieser für jeden Port P gespeicherte Wert Δt_{Äqui}, welcher der verbleibenden Zeit bis zum Ablauf des Äquidistanz-Intervalls entspricht, wird mit dem Äquidistanz-Telegramm über Port P zum benachbarten Netzwerkteilnehmer gesendet.
2. Jeder Netzwerkteilnehmer startet nach dem Empfangen des letzten Nibbles des Type-Feldes des Aquidistanz-Telegramms am MII eines Ports, d.h. beim Empfangen des Aquidistanz-Telegramms von der physikalischen Übertragungsstrecke, einen Hilfs-Timer mit dem Wert der Durchlaufzeit Δt_{DLZP}.
3. Zu dem Zeitpunkt, zu welchem der benachbarte Netzwerkteilnehmer das letzte Nibble des Type-Feldes vom Äquidistanz-Telegramm zur Weiterleitung an das MII eines anderen Ports anlegt, wird der Wert des Hilfs-Timers abgespeichert. Der gespeicherte Wert des Hilfs-Timers entspricht der Übertragungszeit Δt₁ dieses Netzwerkteilnehmers für den Port P. Diese gespeicherte Zeit Δtᵢ wird von der empfangenen Restzeit Δt_{Äqui} bis zum nächsten Zyklusbeginn subtrahiert. Der benachbarte Netzwerkteilnehmer leitet die korrigierte Restzeit (Δt_{Äqui} - Δtᵢ) mit dem Aquidistanz-Telegramm über den anderen Port zum nächsten benachbarten Netzwerkteilnehmer weiter. Zusätzlich lädt er die korrigierte Restzeit in seinen Äquidistanz-Timer, der mit jedem Takt dekrementiert wird.
4. Ist der Äquidistanz-Timer eines Äquidistanz-Slaves abgelaufen, so wird er zunächst mit dem parametrierten Wert des Äquidistanz-Intervalls geladen und mit jedem Bittakt dekrementiert. Sobald ein neues Äquidistanz-Telegramm des Äquidistanz-Masters empfangen wird, lädt der Äquidistanz-Slave die in der beschriebenen Weise ermittelte Restzeit (Δt_{Äqui} - Δtᵢ) bis zum nächsten Zyklusbeginn in den Äquidistanz-Timer.

Für die beschriebene Synchronisation von Äquidistanz-Timern sollte die maximale Übertragungszeit zwischen einem Sender und einem Empfänger im Netzwerk kleiner sein als die Länge des Äquidistanz-Intervalls.

In dem Ausführungsbeispiel wurde ein Netzwerk nach der Ethernet-Spezifikation beschrieben. Die Erfindung ist jedoch ohne weiteres auch auf Fast-Ethernet, Gigabit-Ethernet oder andere Netzwerktypen anwendbar.

## Patentansprüche

1. Netzwerk mit Redundanzeigenschaften, das einer Ethernet-Spezifikation genügt und das zumindest zwei aus mehreren Netzwerkteilnehmern (100...107; 110...117) gebildete Reihen enthält, die über zumindest zwei Kommunikationskanäle miteinander verbunden sind, von denen nur ein erster aktiv und der zweite deaktiviert ist, derart ausgestaltet, daß die Netzwerkteilnehmer Sensoren und/oder Aktuatoren sind, daß der erste Kommunikationskanal durch eine Verbindung eines Ports eines ersten Netzwerkteilnehmers (103), der in der ersten Reihe angeordnet ist, mit einem Port eines zweiten Netzwerkteilnehmers (110), der in der zweiten Reihe angeordnet ist, gebildet wird, und daß der zweite Kommunikationskanal durch eine Verbindung eines Ports eines dritten Netzwerkteilnehmers (104), der in der ersten Reihe angeordnet ist, mit einem Port eines vierten Netzwerkteilnehmers (117), der in der zweiten Reihe angeordnet ist, gebildet wird, **dadurch gekennzeichnet, daß** der erste Netzwerkteilnehmer (103) derart ausgebildet ist, daß er bei unterbrechungsfreiem ersten Kommunikationskanal zyklisch Meidetelegramme, so genannte Port-Select Telegramme, an die Netzwerkteilnehmer (100 ... 107) sendet, welche in der ersten Reihe angeordnet sind und daß der dritte Netzwerkteilnehmer (104) derart ausgebildet ist, daß er zur Überwachung des ersten Kommunikationskanals auf Unterbrechungsfreiheit die Port-Select Telegramme auswertet und bei einer Unterbrechung des ersten Kommunikationskanals den zweiten Kommunikationskanal in den aktiven Zustand versetzt.

2. Netzwerk nach Anspruch 1, **dadurch gekennzeichnet, daß** die Netzwerkteilnehmer derart ausgebildet sind, daß von zwei betriebsbereiten Kommunikationskanälen derjenige Kommunikationskanal aktiv geschaltet wird, der durch eine Verbindung eines Ports eines Netzwerkteilnehmers, der in der ersten Reihe im geringsten Abstand von der Reihenmitte angeordnet ist, mit einem Port eines Netzwerk . tailnehmers, der in der zweiten Reihe angeordnet ist, gebildet wird.

3. Netzwerk nach Anspruch 1 oder 2, **dadurch gekennzeichnet, daß** die erste Reihe über zumindest einen dritten Kommunikationskanal mit einer dritten Reihe verbunden ist, daß die zweite Reihe direkt oder indirekt über einen Kommunikationspfad mit der dritten Reihe verbunden ist, der nicht über Netzwerkteilnehmer der ersten Reihe führt, so daß bei aktivem Zustand aller Kommunikationskanäle des Netzwerks eine Schleife entstehen würde, und daß die Netzwerkteilnehmer des Netzwerks derart ausgebildet sind, daß sie durch Austausch von Konfigurationstelegrammen sicherstellen, daß das Netzwerk schleifenfrei ist und daß jeder Netzwerkteilnehmer mit jedem anderen Netzwerkteilnehmer über genau einen aktiven Kommunikationspfad verbunden ist.

4. Netzwerk nach Anspruch 3, **dadurch gekennzeichnet, daß** die Netzwerkteilnehmer derart ausgestaltet sind, daß zur Herstellung der Schleifenfreiheit des Netzwerks das Spanning-Tree-Verfahren ausgeführt wird, wobei jede Reihe als virtueller Netzwerkteilnehmer, als sogenannter virtueller Switch, und jeder betriebsbereite Port eines Netzwerkteilnehmers einer Reihe, durch dessen Verbindung mit einem betriebsbereiten Port eines Netzwerkteilnehmers einer anderen Reihe ein betriebsbereiter Kommunikationskanal gebildet wird, als ein betriebsbereiter Port des virtuellen Switches angesehen wird.

5. Netzwerk nach Anspruch 4, **dadurch gekennzeichnet, daß** die beiden Linienenden einer Reihe an einen Redundanz-Manager angeschlossen sind, der dazu ausgebildet ist, im fehlerfreien Fall, d.h., wenn keine Unterbrechung innerhalb der Reihe vorhanden ist, die beiden Linienenden zu trennen und im Fehlerfall die beiden Linienenden miteinander zu verbinden.

6. Sensor oder Aktuator zur Verwendung als Netzwerkteilnehmer in einem Ethernet-Netzwerk nach einem der vorhergehenden Ansprüche, **dadurch gekennzeichnet, daß** vier Ports (28 ... 31) zum Anschluß weiterer Netzwerkkomponenten vorgesehen sind, daß eine Schnittstelle (25), ein so genanntes Mikroprozessor-Interface, vorgesehen ist zur Verbindung der Ports mit einem teilnehmerinternen Prozessorbus (21), daß eine Steuereinheit (46), eine so genannte Switch-Control, vorgesehen ist zur Telegrammweglenkung zwischen den Ports und dem Mikroprozessor-Interface und daß eine Einrichtung zur Redundanzsteuerung (50) vorgesehen ist derart, daß der Netzwerkteilnehmer (104) in einem Netzwerk, das zumindest zwei aus mehreren Netzwerkteilnehmern (100 ... 107; 110 ... 117) gebildete Reihen enthält, die über zumindest zwei Kommunikationskanäle miteinander verbunden sind, von denen nur ein erster aktiv und der zweite deaktiviert ist, derart ausgestaltet ist, daß er zyklisch ausgesandte Meldetelegramme, sogenannte Port-Select-Telegramme, auswertet und damit den aktiven Kommunikationskanal auf Unterbrechungsfreiheit überwacht und bei einer Unterbrechung des aktiven Kommunikationskanals den deaktivierten Kommunikationskanal in den aktiven Zustand versetzt.

7. Sensor oder Aktuator nach Anspruch 6, **dadurch gekennzeichnet, daß** die Ports (28 ... 31) der Ethernet-, Fast-Ethernet- oder Gigabit-Ethernet-Spezifikation genügen.

8. Sensor oder Aktuator nach Anspruch 7, **dadurch gekennzeichnet, daß** die Steuereinheit (46) derart ausgebildet ist, daß eine Übertragungspriorität der zu versendenden Telegramme ausgewertet wird und daß Telegramme mit hoher Priorität vor Telegrammen mit niederer Priorität gesendet werden.

9. Sensor oder Aktuator nach einem der Ansprüche 6 bis 8, **dadurch gekennzeichnet, daß** ein Mikroprozessor (23) vorhanden ist zur Korrektur einer internen Uhr (37) anhand in Telegrammen empfangener Uhrzeitinformationen.

## Claims

1. Network with redundant characteristics, which complies with Ethernet specification and contains at least two rows which are formed from two or more network subscribers (100...107; 110...117) and are connected to one another via at least two communication channels, of which only a first is active and the second is deactivated, designed such that the network subscribers are sensors and/or actuators, such that the first communication channel is formed by a connection of one port of a first network subscriber (103), which is arranged in the first row, to one port of a second network subscriber (110) which is arranged in the second row, and such that the second communication channel is formed by a connection of one port of a third network subscriber (104), which is arranged in the first row, to one port of a fourth network subscriber (117) which is arranged in the second row, **characterized in that** the first network subscriber (103) is designed such that, in the case of an uninterruptible first communication channel, it cyclically transmits signalling messages, so-called port select messages, to the network subscribers (110...107) which are arranged in the first row, and **in that** the third network subscriber (104) is designed such that it evaluates the port select messages in order to monitor that the first communication channel is free of interruptions, and, in the event of an interruption in the first communication channel, switches the second communication channel to the active state.

2. Network according to Claim 1, **characterized in that** the network subscribers are designed such that of two communication channels ready to operate, that communication channel is switched to be active which is formed by a connection of one port of a network subscriber which is arranged closest to the row centre from the first row to a port of a network subscriber which is arranged in the second row.

3. Network according to Claim 1 or 2, **characterized in that** the first row is connected via at least one third communication to a third row, **in that** the second row is connected directly or indirectly to the third row via a communication path which does not pass via any network subscribers in the first row, so that a loop will be created if all of the communication channels in the network were in the active state, and **in that** the network subscribers in the network are designed such that they interchange configuration messages in order to ensure that the network is free of loops, and **in that** each network subscriber is connected to every other network subscriber via one, and only one, active communication path.

4. Network according to Claim 3, **characterized in that** the network subscribers are designed such that the spanning tree method is used to ensure that the network is free of loops, with each row being regarded as a virtual network subscriber, as a so-called virtual switch, and with each port of a network subscriber which is ready to operate in a row (by whose connection to a port which is ready to operate of a network subscriber in another row a communication channel which is ready to operate is formed) being regarded as a port which is ready to operate in the virtual switch.

5. Network according to Claim 4, **characterized in that** the two line ends of a row are connected to a redundancy manager, which is designed to disconnect the two line ends when no fault is present, that is to say when there is no interruption with the row, and to connect the two line ends to one another in the event of a fault.

6. Sensor or actuator for use as a network subscriber in an Ethernet network according to one of the preceding claims, **characterized in that** four ports (28...31) are provided for connection of further network components, **in that** an interface (25), a so-called microprocessor interface, is provided for connection of the ports to a subscriber-internal processor bus (21), **in that** a control unit (46), a so-called switch control, is provided for message routing between the ports and the microprocessor interface, and **in that** a device is provided for redundancy control (50), such that the network subscriber (104) in a network which contains at least two rows that are formed from two or more network subscribers (100...107; 110...117) which are connected to one another via at least two communication channels, of which only a first is active and the second is deactivated, is designed such that it evaluates cyclically transmitted signalling messages, so-called port select messages, and thus monitors that the active communication channel is free of interruptions and, in the event of an interruption in the active communication channel, switches the deactivated communication channel to the active state.

7. Sensor or actuator according to Claim 6, **characterized in that** the ports (28...31) comply with an Ethernet, Fast Ethernet or Gigabit Ethernet specification.

8. Sensor or actuator according to Claim 7, **characterized in that** the control unit (46) is designed such that a transmission priority of the messages to be sent is evaluated, and such that messages with a high priority are sent before messages with a low priority.

9. Sensor or actuator according to one of Claims 6 to 8, **characterized in that** a microprocessor (23) is provided for correction of an internal clock (37) on the basis of clock time information received in messages.

## Revendications

1. Réseau avec propriétés de redondance, qui satisfait à une spécification Ethernet, qui comporte au moins deux séries formées de plusieurs utilisateurs de réseau (100 à 107 ; 110 à 117) et reliées entre elles par l'intermédiaire d'au moins deux canaux de communication dont seulement un premier est actif et le deuxième désactivé, et qui est conçu de telle sorte que les utilisateurs de réseau sont des capteurs et/ou des actionneurs, que le premier canal de communication est formé par une liaison d'un port d'un premier utilisateur de réseau (103), qui est placé dans la première série, à un port d'un deuxième utilisateur de réseau (110), qui est placé dans la deuxième série, et que le deuxième canal de communication est formé par une liaison d'un port d'un troisième utilisateur de réseau (104), qui est placé dans la première série, à un port d'un quatrième utilisateur de réseau (117), qui est placé dans la deuxième série, **caractérisé par le fait que** le premier utilisateur de réseau (103) est conçu de telle sorte que, si le premier canal de communication n'est pas interrompu, il envoie cycliquement des télégrammes de signalisation, appelés télégrammes Port-Select, aux utilisateurs de réseau (100 à 107) qui sont placés dans la première série et que le troisième utilisateur de réseau (104) est conçu de telle sorte que, pour surveiller le premier canal de communication afin de vérifier l'absence d'interruption, il évalue les télégrammes Port-Select et, si le premier canal de communication est interrompu, il met le deuxième canal de communication à l'état actif.

2. Réseau selon la revendication 1, **caractérisé par le fait que** les utilisateurs de réseau sont conçus de telle sorte que, des deux canaux de communication prêts à fonctionner, on met à l'état actif le canal de communication qui est formé par une liaison d'un port d'un utilisateur de réseau, qui est placé dans la première série à la plus courte distance du centre de la série, à un port d'un utilisateur de réseau, qui est placé dans la deuxième série.

3. Réseau selon la revendication 1 ou 2, **caractérisé par le fait que** la première série est reliée à une troisième série par l'intermédiaire d'au moins un troisième canal de communication, que la deuxième série est reliée à la troisième série directement ou indirectement via un chemin de communication qui ne passe pas par des utilisateurs de réseau de la première série, de telle sorte qu'il se formerait une boucle si tous les canaux de communication étaient à l'état actif, et que les utilisateurs du réseau sont conçus de telle sorte qu'ils garantissent par l'échange de télégrammes de configuration que le réseau est exempt de boucle et que chaque utilisateur de réseau est relié à chaque autre utilisateur de réseau par l'intermédiaire d'exactement un chemin de communication actif.

4. Réseau selon la revendication 3, **caractérisé par le fait que** les utilisateurs de réseau sont conçus de telle sorte que le procédé Spanning-Tree est réalisé pour établir que le réseau est exempt de boucle, chaque série étant vue comme un utilisateur de réseau virtuel, appelé commutateur ou Switch virtuel, et chaque port prêt à fonctionner d'un utilisateur de réseau d'une série dont la liaison avec un port prêt à fonctionner d'un utilisateur de réseau d'une autre série forme un canal de communication prêt à fonctionner est vu comme un port prêt à fonctionner du commutateur ou Switch virtuel.

5. Réseau selon la revendication **4**, **caractérisé par le fait que** les deux extrémités de ligne d'une série sont raccordées à un gestionnaire de redondance qui est conçu pour, s'il n'y a pas de défaut, c'est-à-dire s'il n'y a pas d'interruption à l'intérieur de la série, séparer les deux extrémités de ligne et, s'il y a un défaut, relier entre elles les deux extrémités de ligne.

6. Capteur ou actionneur destiné à être utilisé comme utilisateur de réseau dans un réseau Ethernet selon l'une des revendications précédentes, **caractérisé par le fait que** quatre ports (28 à 31) sont prévus pour le raccordement d'autres composants de réseau, qu'une interface (25) appelée interface de microprocesseur est prévue pour la liaison des ports à un bus de processeur (21) interne à l'utilisateur de réseau, qu'une unité de commande (46) appelée Switch-Control est prévue pour l'acheminement de télégrammes entre les ports et l'interface de microprocesseur et qu'un dispositif de commande de redondance (50) est prévu de telle sorte que l'utilisateur de réseau (104) dans un réseau, qui contient au moins deux séries formées de plusieurs utilisateurs de réseau (100 à 107 ; 110 à 117) et reliées entre elles par l'intermédiaire d'au moins deux canaux de communication dont seulement un premier est actif et le deuxième désactivé, est conçu de telle sorte qu'il évalue des télégrammes de signalisation cycliquement émis et appelés télégrammes Port-Select, qu'il surveille avec ceux-ci le canal de communication actif afin de vérifier l'absence d'interruption et que, si le canal de communication actif est interrompu, il met à l'état actif le canal de communication désactivé.

7. Capteur ou actionneur selon la revendication 6, **caractérisé par le fait que** les ports (28 à 31) satisfont à la spécification Ethernet, Fast-Ethernet ou Gigabit-Ethernet.

8. Capteur ou actionneur selon la revendication 7, **caractérisé par le fait que** l'unité de commande (46) est conçue de telle sorte qu'une priorité de transmission des télégrammes à envoyer est évaluée et que des télégrammes ayant une priorité supérieure sont envoyés avant des télégrammes ayant une priorité inférieure.

9. Capteur ou actionneur selon l'une des revendications 6 à 8, **caractérisé par le fait qu'**un microprocesseur (23) est prévu pour la correction d'une horloge interne (37) à l'aide d'informations temporelles reçues dans des télégrammes.
